(19) Europäisches Patentamt
European Patent Office
Office européen des brevets

(11) **EP 2 449 533 B1**

## (12) FASCICULE DE BREVET EUROPEEN

(45) Date de publication et mention
de la délivrance du brevet:
**31.10.2012 Bulletin 2012/44**

(21) Numéro de dépôt: **10737790.5**

(22) Date de dépôt: **18.06.2010**

(51) Int Cl.:
***G06T 11/00*** *(2006.01)*

(86) Numéro de dépôt international:
**PCT/EP2010/058616**

(87) Numéro de publication internationale:
**WO 2011/000718 (06.01.2011 Gazette 2011/01)**

(54) **PROCEDE ET DISPOSITIF D'IMAGERIE A RAYONS X A TRAITEMENT TRIDIMENSIONNEL**

RÖNTGENBILDGEBUNGSVERFAHREN UND VORRICHTUNG MIT DREIDIMENSIONALER VERARBEITUNG

X-RAY IMAGING METHOD AND DEVICE WITH THREE-DIMENSIONAL PROCESSING

(84) Etats contractants désignés:
**AL AT BE BG CH CY CZ DE DK EE ES FI FR GB GR HR HU IE IS IT LI LT LU LV MC MK MT NL NO PL PT RO SE SI SK SM TR**

(30) Priorité: **03.07.2009 FR 0903261**

(43) Date de publication de la demande:
**09.05.2012 Bulletin 2012/19**

(73) Titulaire: **Beyrard, Norbert**
**01220 Divonne-Les-Bains (FR)**

(72) Inventeur: **Beyrard, Norbert**
**01220 Divonne-Les-Bains (FR)**

(74) Mandataire: **Gaglione, Renaud**
**240, rue du Quart**
**01710 Thoiry (FR)**

(56) Documents cités:
**WO-A2-2007/006560**

**Description**

L'invention se rapporte à un procédé d'imagerie à rayons X, du type scanographie, dans lequel, un corps à examiner étant reçu par un support,

- on émet, à partir du foyer d'une source, un faisceau de rayons X i et j en direction du corps à examiner,
- on détecte, à l'aide d'un détecteur irradié par le faisceau, une intensité atténuée en fonction d'une traversée des rayons X à travers le corps à examiner, sous différentes paires de positions angulaires $\theta_a$, $\theta_b$ du corps à examiner ou de l'ensemble source - détecteur autour d'un axe de rotation, les deux positions angulaires $\theta_a$, $\theta_b$ des différentes paires présentant un écart angulaire $\Delta$,
- on convertit, à l'aide d'un convertisseur numérique, les intensités détectées en données $c^{(a)}$, $\rho^{(b)}$ et,
- on traite, à l'aide d'un ordinateur programmé, les données $c^{(a)}$, $\rho^{(b)}$ pour aboutir à une image exprimant un coefficient d'atténuation des rayons X en un ensemble de points {P0} du corps à examiner, en calculant, pour une paire de positions angulaires $\theta_a$, $\theta_b$, une valeur C du coefficient d'atténuation en un point P0 de l'ensemble {P0} par application de la formule suivante :

$$C = \frac{\rho^{(b)}}{n} + \frac{c^{(a)}}{n} - \frac{1}{2n^2} \left( \sum_{k=1}^{n} c_k^{(a)} + \sum_{u=1}^{n} \rho_u^{(b)} \right)$$

dans laquelle :

$c(a)$ est la donnée provenant de l'intensité détectée au point d'impact $T^{(a)}$ d'un premier rayon i passant par le point considéré P0 dans la première position angulaire $\theta_a$,

$\rho^{(b)}$ est la donnée provenant de l'intensité détectée au point d'impact $R^{(b)}$ d'un deuxième rayon j passant par le point considéré P0 dans la deuxième position angulaire $\theta_b$, $\displaystyle\sum_{k=1}^{n} c_k^{(a)}$ est la charge associée au premier point d'impact $T^{(a)}$, définie par la somme des données $c_k^{(a)}$ provenant des intensités détectées dans la

première position angulaire $\theta_a$, le long de (n) points $T_k^{(a)}$ d'une première ligne de calcul de charge qui passe au plus près du premier point d'impact $T^{(a)}$, et $\displaystyle\sum_{u=1}^{n} \rho_u^{(b)}$ est la charge associée au deuxième point d'impact

$R^{(b)}$, définie par la somme des données $\rho_u^{(b)}$ provenant des intensités détectées dans la deuxième position

angulaire $\theta_b$, le long de (n) points $R_u^{(b)}$ d'une deuxième ligne de calcul de charge qui passe au plus près du deuxième point d'impact $R^{(b)}$.

Un procédé de ce type est connu de la demande de brevet française FR 2 888 374 et de la demande internationale WO 2007/006560 déposées par le demandeur. Le coefficient d'atténuation C au point considéré P0 du corps à examiner est calculé par la méthode dite de la génération directe. Le calcul ne nécessite que la connaissance des données $c^{(a)}$ et $\rho^{(b)}$ provenant des intensités détectées aux deux points d'impact des deux rayons X passant par le point considéré P0 sous les premières et deuxième positions angulaires du corps à examiner ou de l'ensemble source - détecteur autour de l'axe de rotation $\Omega$.

La formule de la génération directe décrite dans les documents FR 2 888 374 et WO 2007/006560 est rappelée ci-après. Elle dérive d'une simplification de la formule générale du Lagrangien :

$$C_{ij} = B_{ij} + \frac{1}{n}\left(\rho_j - \sum_{i=1}^{n} B_{ij}\right) + \frac{1}{m}\left(c_i - \sum_{j=1}^{m} B_{ij}\right) - \frac{1}{nm}\left(\sum_{j=1}^{m} \rho_j - \sum_{i=1}^{n}\ \sum_{j=1}^{m} B_{ij}\right)$$

lorsque l'on prend pour Bij l'estimation définie par la demi-somme de l'intensité détectée $c_i$ au premier point d'impact divisée par le nombre m des points d'impact de la première ligne de charge et de l'intensité détectée au deuxième point d'impact $\rho_j$ divisée par le nombre n des points d'impact de la deuxième ligne de charge :

$$B_{ij} = \frac{1}{2}\left(\frac{\rho_j}{n} + \frac{c_i}{m}\right)$$

étant observé que par suite de la conservation de la dose totale d'irradiation :

$$\sum_{i=1}^{n} c_i = \sum_{j=1}^{m} \rho_j$$

Ainsi,

$$C_{ij} = \frac{\rho_j}{n} + \frac{c_i}{m} - \frac{1}{2nm}\left(\sum_{i=1}^{n} c_i + \sum_{j=1}^{m} \rho_j\right)$$

Le cas particulier où n = m conduit à :

$$C_{ij} = \frac{\rho_j}{n} + \frac{c_i}{n} - \frac{1}{2n^2}\sum_{k=1}^{n}(\rho_k + c_k)$$

La méthode de la génération directe est utilisée pour calculer le coefficient d'atténuation d'un ensemble {P0} de points appartenant à un plan de coupe du corps à examiner, perpendiculairement à l'axe de rotation $\Omega$. Dans ces conditions, les charges associées aux premier et deuxième points d'impact sont calculées le long de deux lignes de calcul de charge définies par la trace sur le détecteur du plan de coupe, sous les première et deuxième positions angulaires du corps à examiner ou de l'ensemble source - détecteur autour de l'axe de rotation $\Omega$. La valeur des charges associées est constante pour tous les points P0 appartenant au plan de coupe.

Les opérations élémentaires de calcul du coefficient d'atténuation C conduisent à un gain de temps très important. Le terme soustractif qui rend compte des charges associées aux premier et deuxième points d'impact est calculé une fois pour toutes et sa valeur est simplement rappelée dans le calcul du coefficient d'atténuation C de tous les points P0 du plan de coupe. De surcroît, le calcul du coefficient d'atténuation C ne nécessite pas d'étape de rétro- projection de l'image obtenue sous la première position angulaire dans l'image obtenue sous la deuxième position angulaire. Le calcul direct à partir des données $c^{(a)}$ et $\rho^{(b)}$ provenant des intensités détectées aux deux points d'impact conduit à une réduction importante des erreurs de calcul.

Cependant, le calcul du coefficient d'atténuation C dans un plan de coupe perpendiculaire à l'axe de rotation $\Omega$ impose de déplacer, parallèlement à cet axe, le corps à examiner ou l'ensemble source - détecteur pour obtenir des images de toute une série de plans de coupe, autrement dit pour explorer un volume du corps à examiner.

L'un de buts de l'invention est de modifier le procédé connu qui vient d'être décrit pour s'affranchir du calcul du coefficient d'atténuation dans un plan de coupe perpendiculaire à l'axe de rotation tout en conservant la rapidité de temps de calcul et la réduction des erreurs de calcul apportées par la méthode de la génération directe.

A cet effet, l'invention a pour objet un procédé conforme à celui rappelé en introduction, caractérisé en ce que

l'ordinateur est programmé pour effectuer les étapes suivantes :

(1) pré- calculer, pour tout point générique d'un volume irradié par le faisceau émis par la source, la position sur le détecteur d'un premier point d'impact T d'un rayon i et d'un deuxième point d'impact $R$ d'un rayon j, les deux rayons i et j passant par le point générique et se déduisant l'un de l'autre par une rotation du point générique ou du de l'ensemble source - détecteur autour de l'axe de rotation $\Omega$ dont l'angle est égal à l'écart angulaire $\Delta$ entre les deux positions angulaires $(\theta_a, \theta_b)$ des différentes paires de positions angulaires du corps à examiner ou de l'ensemble source - détecteur autour de l'axe de rotation $\Omega$,

(2) pré- calculer sur le détecteur la position de premières et de deuxièmes lignes de calcul de charge de points de détection $T_{p,k}; k = 1 \rightarrow n; p = 1 \rightarrow m$ et $R_{q,u}; u = 1 \rightarrow n; q = 1 \rightarrow m$ se prolongeant pour converger respectivement en un premier et un deuxième points géométriques dont les positions sont déterminées par la distance du foyer à l'axe de rotation et la distance du détecteur à l'axe de rotation, chaque ligne étant inclinée par rapport à l'axe de rotation d'un angle de pente $\gamma_p$, $\gamma_q$ qui s'échelonne en une série de valeurs discrètes déterminées par une résolution spatiale du détecteur parallèlement à l'axe de rotation,

(3) effectuer le calcul de la valeur du coefficient d'atténuation en considérant, en fonction de la position du point P0 dans le volume irradié par le faisceau, les positions pré- calculées des premier et deuxième points d'impact $T^{(a)}$; $R^{(b)}$ et les première p et deuxième q lignes de calcul de charge pré-construi-tes $T_{p,k}^{(a)}; k = 1 \rightarrow n$ ; $R_{q,u}^{(b)}; u = 1 \rightarrow n$ qui passent au plus près des premier et deuxième points d'impact $(T^{(a)}; R^{(b)})$,

(4) recommencer l'étape (3) pour les différentes paires de positions angulaires $(\theta_a, \theta_b)$ du corps à examiner ou de l'ensemble source - détecteur autour de l'axe de rotation et calculer une valeur moyenne <C> du coefficient d'atténuation C au point considéré P0 pour les différentes paires de positions angulaires, et

(5) recommencer l'étape (4) et afficher à l'écran de l'ordinateur l'image exprimant les valeurs moyennes <C> de l'ensemble {P0} des points P0.

L'étape (1) de programmation de l'ordinateur permet de construire une base géométrique faisant correspondre à tout point du volume irradié par le faisceau les deux points d'impact des deux rayons qui passent par ce point.

Les m premières et deuxièmes lignes de calcul de charge définies à l'étape (2) marquent la trace sur le détecteur de m plans inclinés par rapport à l'axe de rotation. L'écart angulaire entre deux plans est fixé en fonction de la résolution spatiale du détecteur parallèlement à l'axe de rotation. Il est choisi de préférence le plus faible possible pour former des lignes de calcul de charge les plus serrées possible.

La base de correspondance géométrique pré- calculée à l'étape (1) et les m lignes de calcul de charge pré-construites à l'étape (2) sont utilisées à l'étape (3) de programmation de l'ordinateur pour calculer le coefficient d'atténuation C en n'importe quel point P0 du corps à examiner. En fonction de la position de ce point P0 dans le volume irradié par le faisceau, l'ordinateur recherche dans la base géométrique les premier et deuxième points d'impact correspondants, appelle la donnée $c^{(a)}$ provenant de l'intensité détectée au premier point d'impact sous la première position angulaire, appelle la donnée $\rho^{(b)}$ provenant de l'intensité détectée au deuxième point d'impact sous la deuxième position angulaire, recherche la ligne de calcul de charge qui passe le plus près du premier point d'impact et calcule la charge associé à ce point d'impact, recherche la ligne de calcul de charge qui passe le plus près du deuxième point d'impact et calcule la charge associée à ce point, et finalement calcule la valeur du coefficient d'atténuation C au point considéré sous la paire de positions angulaires considérées.

Les étapes (4) et (5) permettent de passer d'une paire de positions angulaires à une autre pour calculer une valeur moyenne du coefficient d'atténuation au point considéré, puis de passer à un autre point du corps à examiner.

Ainsi, le procédé selon l'invention permet de suivre n'importe quel point du corps à examiner se trouvant dans le volume d'irradiation ou d'illumination du faisceau émis par la source. La programmation de l'ordinateur conduit à affranchir le calcul du coefficient d'atténuation de la condition d'appartenance des points à un même plan de coupe perpendiculaire à l'axe de rotation. La pré- construction des lignes de calcul de charge et de la base de correspondance géométrique permet de conserver la rapidité et la réduction des erreurs de calcul de la méthode de la génération directe. Le temps de calcul est limité à ce qui est strictement nécessaire au nombre de points P0 dont les valeurs du coefficient d'atténuation sont recherchées sans qu'il soit nécessaire de les extraire d'un ensemble de calculs de points beaucoup plus large. De surcroît, le volume à irradier est limité à ce qui est strictement nécessaire pour obtenir l'information pertinente à l'exécution du calcul.

Par comparaison avec le procédé tomodensitométrique décrit dans les demandes antérieures citées en introduction, l'invention apporte un procédé spatiodensitométrique.

D'autres avantages de l'invention apparaîtront à la lumière de la description des modes de réalisation illustrés par les dessins.

La figure 1 est une vue dans le plan O,x,y de la géométrie d'un dispositif d'imagerie conçu pour la mise en oeuvre d'un procédé selon l'invention, le dispositif comportant deux ensembles source - détecteur.

La figure 2 est une vue en élévation, parallèlement à l'axe de rotation $\Omega$, d'un premier rayon i et de son point d'impact sur l'un des détecteurs du dispositif illustré par la figure 1.

La figure 3 est une vue en élévation, parallèlement à l'axe de rotation $\Omega$, d'un deuxième rayon j et de son point d'impact sur l'autre détecteur du dispositif illustré par la figure 1.

La figure 4 est un tableau indiquant les coordonnées de deux points d'impact sous une succession de positions angulaires.

La figure 5 est une vue de face de l'un des détecteurs, sur lequel sont reportés le point d'impact du premier rayon i et une ligne de calcul de charge passant au plus près de ce point d'impact.

La figure 6 est une vue de face de l'autre détecteur, sur lequel sont reportés le point d'impact du deuxième rayon j et une ligne de calcul de charge passant au plus près de ce point d'impact.

La figure 7 est un tableau indiquant des largeurs de marche, des nombres de points de détection par marche, un nombre de marches par ligne de calcul de charge et une hauteur atteinte par deux lignes de calcul de charge.

La figure 8 est un tableau indiquant les coordonnées de deux points d'impact, une altitude $Z^*$ de deux points de référence correspondant et l'indice p ou q de deux lignes de calcul de charge passant au plus près des deux points de référence.

La figure 9 est une vue dans le plan O,x,y de la géométrie d'un dispositif d'imagerie conçu pour la mise en oeuvre d'un procédé selon l'invention, le dispositif ne comportant qu'un ensemble source - détecteur.

La figure 10 est une vue dans le plan O,x,y de la géométrie du dispositif illustré par la figure 9, un point générique G ayant effectué une rotation $\Delta$ autour de l'axe de rotation $\Omega$.

La figure 11 est une vue de face du détecteur, sur lequel sont reportés les points d'impact des premier et deuxième rayons i et j ainsi que deux lignes de calcul de charge passant au plus près de ces points d'impact.

La figure 12 est une vue dans le plan O,x,y de la géométrie du dispositif illustré par la figure 9, un point générique G ayant effectué une rotation $\Delta$ autour de l'axe de rotation $\Omega$ supérieure à 90° d'un angle $\alpha$.

La figure 13 est une vue schématique en coupe d'un premier dispositif conçu pour mettre en oeuvre un procédé selon l'invention.

La figure 14 est une vue schématique en coupe d'un deuxième dispositif conçu pour mettre en oeuvre un procédé selon l'invention.

Le procédé selon l'invention est décrit tout d'abord par référence à un dispositif d'imagerie à rayons X comprenant deux ensembles source - détecteur. Cependant, l'invention n'est pas limitée à une telle géométrie et l'exposé sera poursuivi par référence à un dispositif d'imagerie à rayons X ne comprenant qu'un ensemble source - détecteur.

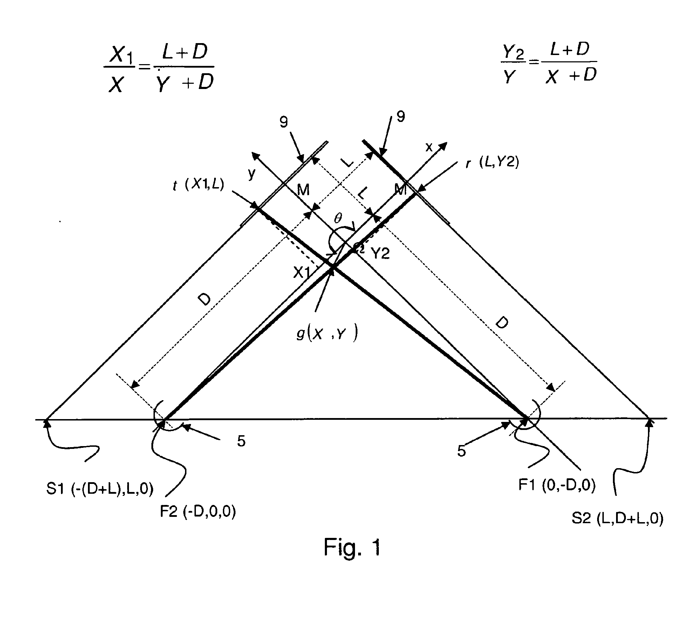

Un dispositif d'imagerie à rayons X, du type scanographie, comprend, figure 1, deux sources 5 émettant un faisceau de rayons X à partir de deux foyers F1 et F2. Les deux foyers F1 et F2 sont disposés respectivement sur deux axes y et x, à une même distance D d'un centre O. Le repère O,x,y définit le plan de référence du dispositif. L'axe perpendiculaire au plan de référence et passant par le centre O définit l'axe de rotation $\Omega$.

Le dispositif comprend également deux détecteurs 9, disposés perpendiculairement aux deux axes x et y sur lesquels les foyers F1 et F2 deux sources sont disposées. Les deux détecteurs 9 sont disposés à une même distance L du centre O. Ils s'étendent sur une largeur égale à 2l et sur une hauteur égale à 2h. Lorsqu'ils sont irradiés par les faisceaux émis par les sources, ils détectent une intensité atténuée en fonction d'une traversée des rayons X à travers un corps à examiner disposé entre source et détecteur.

La figure 1 étant volontairement limitée à la géométrie du dispositif, le corps à examiner n'y est pas représenté, pas plus que le support sur lequel ce corps est disposé. Cependant, le support est monté mobile en rotation autour de l'axe de rotation $\Omega$ pour explorer le corps à examiner sous différentes positions angulaires. Alternativement, on monte les deux ensembles source - détecteur mobiles en rotation autour de l'axe de rotation $\Omega$. La figure 1 illustre une géométrie dans laquelle la rotation du support ou des deux ensembles source - détecteur conduit par construction à des paires de positions angulaires dont les deux positions angulaires de toute paire présentent un écart angulaire $\Delta$ égal à 90 degrés.

Non représentés sur la figure 1, le dispositif comprend encore un convertisseur analogique-numérique pour convertir les intensités détectées en données et un ordinateur programmé pour traiter les données et aboutir à une image exprimant un coefficient d'atténuation des rayons X en un ensemble {P0} de points P0 du corps à examiner.

Il convient de rappeler ici que le coefficient d'atténuation en un point P0 du corps à examiner est calculé, pour une paire de positions angulaires $\theta_a$, $\theta_b$ par application de la formule suivante :

$$C = \frac{\rho^{(b)}}{n} + \frac{c^{(a)}}{n} - \frac{1}{2n^2}\left(\sum_{k=1}^{n} c_k^{(a)} + \sum_{u=1}^{n} \rho_u^{(b)}\right)$$

dans laquelle :

$c^{(a)}$ est la donnée provenant de l'intensité détectée au point d'impact $T^{(a)}$ d'un premier rayon i passant par le point considéré P0 dans la première position angulaire $\theta_a$,

$p^{(b)}$ est la donnée provenant de l'intensité détectée au point d'impact $R^{(b)}$ d'un deuxième rayon j passant par le point considéré P0 dans la deuxième position angulaire $\theta_b$, $\sum_{k=1}^{n} c_k^{(a)}$ est la charge associée au premier point d'impact

$T^{(a)}$, définie par la somme des données $c_k^{(a)}$ provenant des intensités détectées dans la première position angulaire $\theta_a$, le long de (n) points $T_k^{(a)}$ d'une première ligne de calcul de charge qui passe au plus près du premier point d'impact $T^{(a)}$, et $\sum_{u=1}^{n} \rho_u^{(b)}$ est la charge associée au deuxième point d'impact $R^{(b)}$, définie par la somme des

données $\rho_u^{(b)}$ provenant des intensités détectées dans la deuxième position angulaire $\theta_b$, le long de (n) points

$R_u^{(b)}$ d'une deuxième ligne de calcul de charge qui passe au plus près du deuxième point d'impact $R^{(b)}$.

Selon l'invention, l'ordinateur est programmé pour pré- calculer, lors d'une première étape, la position sur les détecteurs 9 du point d'impact $T$ du rayon i et du point d'impact $R$ du rayon j, passant par tout point générique G d'un volume irradié par les faisceaux émis par les sources 5.

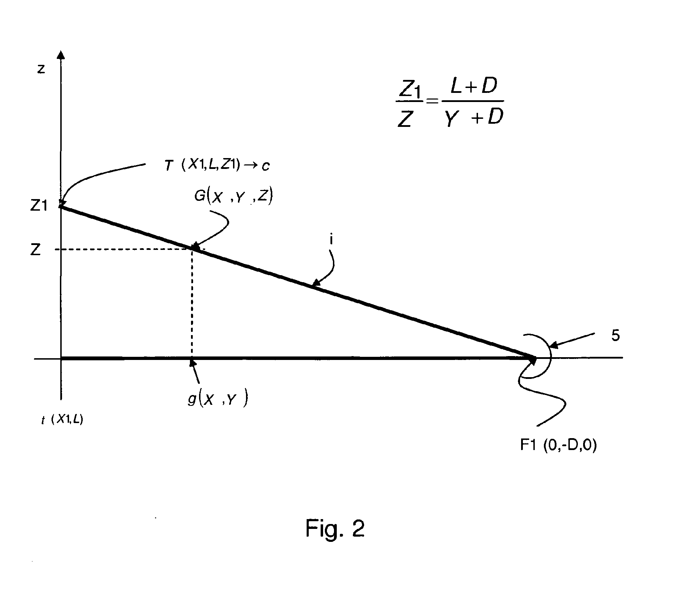

Figure 2, le rayon i issu du foyer F1 et passant par le point générique G de coordonnées (X,Y,Z) frappe l'un des détecteurs 9 au point d'impact T de coordonnées (X1,L,Z1). En ce point d'impact, la donnée provenant de l'intensité détectée par le détecteur est c. L'altitude Z1 se calcule par la formule suivante :

$$\frac{Z_1}{Z} = \frac{L+D}{Y+D} = k_1$$

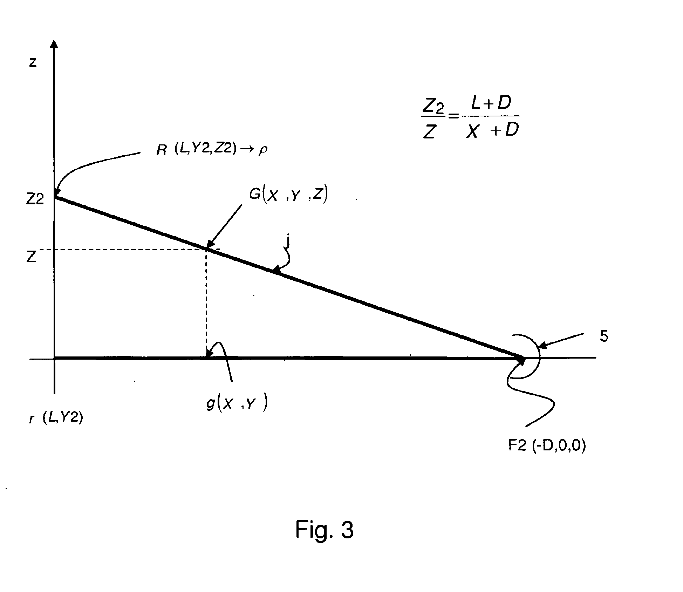

De même, figure 3, le rayon j issu du foyer F2 et passant par le point générique G de coordonnées (X,Y,Z) frappe l'autre détecteur 9 au point d'impact R de coordonnées (L,Y2,Z2). En ce point d'impact, la donnée provenant de l'intensité détectée par le détecteur est $\rho$. L'altitude Z2 se calcule par la formule suivante :

$$\frac{Z2}{Z} = \frac{L+D}{X\ +D} = k_2$$

Les deux rayons i et j passant par le point générique G se déduisent l'un de l'autre par une rotation de l'un des ensembles source 5 - détecteur 9 vers l'autre ensemble source 5 - détecteur 9 autour de l'axe de rotation $\Omega$, l'angle de cette rotation étant égal à 90 degrés, c'est à dire à l'écart angulaire $\Delta$ entre les deux positions angulaires $\theta_a$, $\theta_b$ des différentes paires de positions angulaires du corps à examiner 3 ou des deux ensembles source 5 - détecteur 9 autour de l'axe de rotation $\Omega$.

Figure 1, le point générique G (X,Y,Z) et le point d'impact T (X1,L,Z1) du rayon i sur l'un des détecteurs se projettent dans le plan médian respectivement aux points g (X,Y,0) et t (X1,L,0). Le rayon i issu du foyer F1 et passant par le point générique G se projette dans le plan médian pour passer par les points projetés g (X,Y,0) et t (X1,L,0). La coordonnée X1 du point d'impact T se calcule alors par une formule analogue à celle de l'altitude Z1 :

$$\frac{X_1}{X} = \frac{L+D}{Y\ +D} = k_1$$

De même, le point d'impact R (L,Y2,Z2) du rayon j sur l'autre détecteur se projette dans le plan médian au point r (L,Y2,0). Le rayon j issu du foyer F2 et passant par le point générique G se projette dans le plan médian pour passer par les points projetés g (X,Y,0) et r (L,Y2,0). La coordonnée Y2 du point d'impact R se calcule alors par une formule analogue à celle de l'altitude Z2 :

$$\frac{Y2}{Y} = \frac{L+D}{X\ +D} = k_2$$

La première étape de programmation de l'ordinateur permet ainsi de construire une base de correspondance géométrique entre tout point du volume irradié par les faisceaux émis par les deux sources 5 et les points d'impact sur les deux détecteurs 9, des deux rayons i et j qui passent par ce point en étant issus des foyers F1 et F2 des deux sources. Cette base de correspondance est déterminée par la géométrie du dispositif, en l'occurrence par la distance D des foyers F1 et F2 à l'axe de rotation $\Omega$ et la distance L des détecteurs 9 à cet axe de rotation. Indépendante du corps à examiner et des différentes paires de positions angulaires du corps à examiner ou des deux ensembles source - détecteur autour de l'axe de rotation $\Omega$ qui présentent le même écart angulaire $\Delta$, elle est programmée une fois pour toutes et réutilisée pour tous les points du volume exploré du corps à examiner sous toutes les paires de positions angulaires.

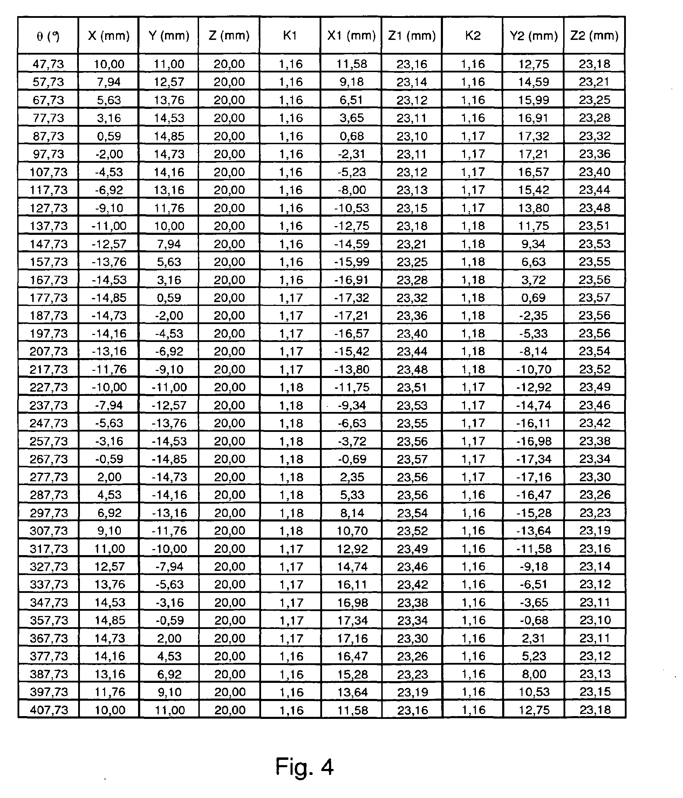

A titre d'exemple numérique, on considère la géométrie illustrée par les figures 1 à 3 dans laquelle D = 150 cm et L = 25 cm. Le tableau de la figure 4 indique les rapports entre les coordonnées du point générique G (X,Y,Z) et celles des deux points d'impact T (X1,L,Z1) et R (L,Y2,Z2) sous une succession de positions angulaires $\theta$ du point générique G allant de 10 degrés en 10 degrés autour de l'axe de rotation $\Omega$.

L'ordinateur est également programmé pour pré- calculer, lors d'une deuxième étape, la position sur l'un des détecteur 9, de m premières lignes de calcul de charge constituées de n points de détection $T_{p,k}$; $k = 1 \rightarrow n$ ; $p = 1 \rightarrow m$ et sur l'autre détecteur 9, de m deuxièmes lignes de calcul de charge constituées de n points de détection $R_{q,u}$; $u = 1 \rightarrow n$; $q = 1 \rightarrow m$. Le nombre n de points de détection le long d'une ligne de calcul de charge est déterminé par la résolution spatiale des détecteurs 9 dans le sens de la largeur. Le nombre m de lignes de calcul de charges est déterminé par la résolution des détecteurs dans le sens de la hauteur, parallèlement à l'axe de rotation $\Omega$.

Les premières et deuxièmes lignes de calcul de charge se prolongent pour converger respectivement en un premier S1 et un deuxième S2 points géométriques dont les positions sont déterminées par la distance D des foyers F1 et F2 à l'axe de rotation Ω et la distance L des détecteurs 9 à l'axe de rotation Ω. Chaque ligne p ou q de calcul de charge est inclinée par rapport à l'axe de rotation Ω d'un angle de pente $\gamma_p$ ou $\gamma_q$ qui s'échelonne en une série de valeurs discrètes déterminées par la résolution spatiale du détecteur 9 dans le sens de la hauteur.

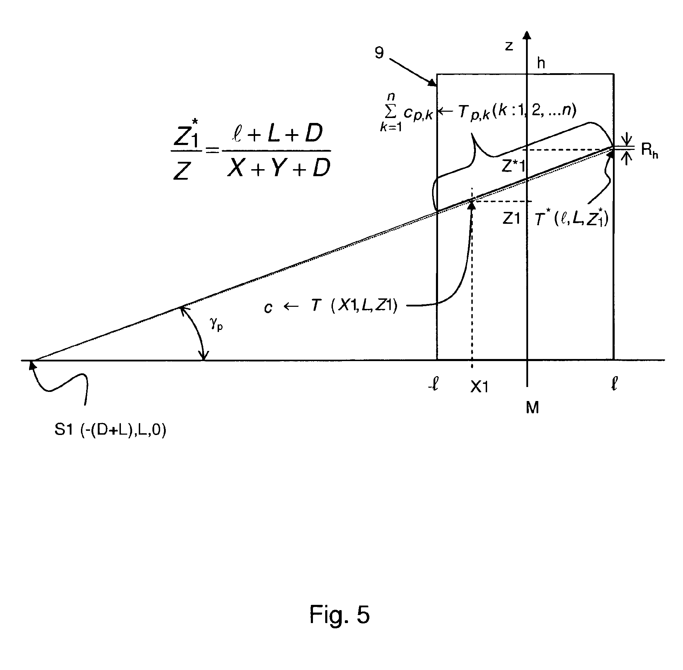

Figure 5, l'un des détecteurs 9 est représenté de face, sur une mi-hauteur. Il s'agit du détecteur disposé perpendiculairement à l'axe y sur lequel est disposé le foyer F1 de l'une des deux sources. Conventionnellement, on définit le côté gauche, respectivement droit, du détecteur par le côté qui s'étend à gauche, respectivement à droite, de l'axe de rotation Ω projeté sur le détecteur par le faisceau émis par le foyer F1. Sur la figure 5 sont également représentés, le point d'impact T (X1,L,Z1) du rayon i passant par le point générique G (X,Y,Z) et la ligne de calcul de charge qui passe au plus près de ce point d'impact. Cette ligne indicée p est constituée par les n points de détection $T_{p,k}$; $k = 1 \rightarrow n$ et la charge calculée le long de cette ligne n est égale à $\sum\limits_{k=1}^{n} c_{p,k}$. La ligne p de calcul de charge se prolonge vers la gauche au-delà du détecteur pour converger vers le point géométrique S1 dont les coordonnées sont (-(D+L),L,0). Comme visible sur la figure 1, ce point géométrique appartient au plan de référence O,x,y et forme l'intersection de la droite reliant les deux foyers F1 et F2 avec le plan du détecteur 9, perpendiculairement à l'axe y.

L'inclinaison de la ligne p de calcul de charge est fixée en fonction de la résolution spatiale du détecteur dans le sens de la hauteur. Dans l'exemple illustré par la figure 5, le bord droit du détecteur, soit encore le bord opposé au point géométrique de convergence S1, a été retenu pour fixer l'échelonnement des angles de pente $\gamma_p$ des m premières lignes de calcul de charge. Ce choix conduit à des angles de pente les plus faibles possibles et procure le réseau de m lignes de calcul de charge le plus serré. Si l'on retient le bord gauche du détecteur, c'est à dire le bord disposé du même côté que le point géométrique de convergence S1, pour fixer l'échelonnement des angles de pente, on obtient des angles de pente plus forts et un réseau de m lignes de calcul de charge moins serré.

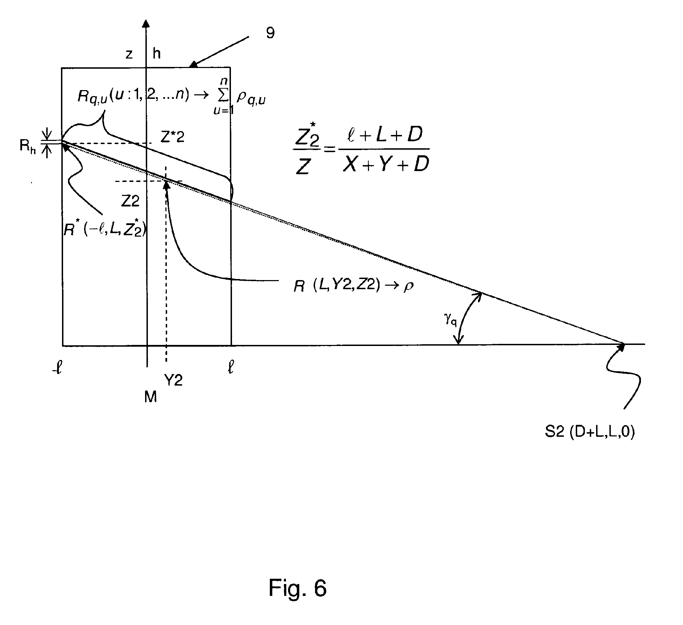

De même, figure 6, l'autre des détecteurs 9 est représenté de face, sur une mi-hauteur également. Il s'agit du détecteur disposé perpendiculairement à l'axe x sur lequel est disposé le foyer F2 de l'autre source. Conventionnellement, on définit le côté gauche, respectivement droit, du détecteur par le côté qui s'étend à gauche, respectivement à droite, de l'axe de rotation Ω projeté sur le détecteur par le faisceau émis par le foyer F2. Sur la figure 6 sont également représentés, le point d'impact R (L,Y2,Z2) du rayon j passant par le point générique G (X,Y,Z) et la ligne de calcul de charge qui passe au plus près de ce point d'impact. Cette ligne indicée q est constituée par les n points de détection $R_{q,u}$; $u = 1 \rightarrow n$ et la charge calculée n le long de cette ligne est égale à $\sum\limits_{u=1}^{n} \rho_{q,u}$. La ligne q de calcul de charge se prolonge vers la droite au-delà du détecteur pour converger vers le point géométrique S2 dont les coordonnées sont (L,(D+L),0). Comme visible sur la figure 1, ce point géométrique appartient au plan de référence O,x,y et forme l'intersection de la droite reliant les deux foyers F1 et F2 avec le plan du détecteur 9, perpendiculairement à l'axe x.

L'inclinaison de la ligne q de calcul de charge est fixée en fonction de la résolution spatiale du détecteur dans le sens de la hauteur. Dans l'exemple illustré par la figure 6, le bord gauche du détecteur, soit encore le bord opposé au point géométrique de convergence S2, a été retenu pour fixer l'échelonnement des angles de pente $\gamma_q$ des m deuxièmes lignes de calcul de charge. Ce choix conduit à des angles de pente les plus faibles possibles et procure le réseau de m lignes de calcul de charge le plus serré. Si l'on retient le bord droit du détecteur, c'est à dire le bord disposé du même côté que le point géométrique de convergence S2, pour fixer l'échelonnement des angles de pente, on obtient des angles de pente plus forts et un réseau de m lignes de calcul de charge moins serré.

Si l'on appelle $R_h$ la résolution spatiale des détecteurs dans le sens de la hauteur, l'angle de pente $\gamma_p$ de la ligne p des m premières lignes de calcul de charge est donné, dans l'hypothèse où le bord droit de l'un des détecteurs a été retenu pour fixer l'échelonnement des angles de pente, par la formule

$$\gamma_p = Arctg\left(\frac{p \times R_h}{D+L+\ell}\right); p = 1 \rightarrow m = \frac{h}{R_h}$$

De même, l'angle de pente $\gamma_q$ de la ligne q des m deuxièmes lignes de calcul de charge est donné, dans l'hypothèse où le bord gauche de l'autre détecteur a été retenu pour fixer l'échelonnement des angles de pente, par la

formule

$$\gamma_q = -Arctg\left(\frac{q \times R_h}{D+L+\ell}\right); q = 1 \rightarrow m = \frac{h}{R_h}$$

Pour pré- construire les premières et deuxièmes lignes de calcul de charge, on approche chaque ligne par une succession de marches d'escalier. La hauteur des marches est fixée à la valeur de la résolution spatiale $R_h$ dans le sens de la hauteur. La largeur des marches est donnée par la formule

$$\ell_p = \frac{D+L+\ell}{p} \qquad \text{ou} \qquad \ell_q = \frac{D+L+\ell}{q}$$

Si l'on appelle $R_\ell$ la résolution spatiale des détecteurs dans le sens de la largeur, le nombre de points de détection, ou pixels, par marche est égal à

$$N_p = \frac{\ell_p}{R_\ell} \qquad \text{ou} \qquad N_q = \frac{\ell_q}{R_\ell}$$

La largeur des marches ainsi que le nombre de points de détection par marche diminuent avec l'augmentation de l'angle de pente des lignes de calcul de charge.

Les m premières lignes et les m deuxièmes lignes de calcul de charge définies précédemment marquent la trace sur les deux détecteurs de m plans inclinés par rapport à l'axe de rotation $\Omega$. Tous ces plans se déduisent les uns des autres par une rotation autour de la droite reliant les deux foyers F1 et F2. L'écart angulaire entre deux plans inclinés est fixé en fonction de la résolution spatiale des détecteurs suivant la hauteur $R_h$. Un plan incliné coïncide avec le plan porté par les deux rayons i et j passant par le point générique G (X,Y,Z) lorsque les deux points d'impact T (X1,L,Z1) et R (L,Y2,Z2) des deux rayons i et j tombent sur les deux lignes de calcul de charge indicées p et q qui marquent la trace du plan incliné sur les deux détecteurs.

Autrement dit, à la résolution spatiale près des détecteurs dans le sens de la hauteur, les lignes de calcul de charge marquent la trace sur les deux détecteurs des plans portés par tout couple de rayons i et j issus respectivement des foyers F1 et F2 et se coupant en tout point générique G du volume irradié. Pour un tel couple de rayons i et j, la ligne p de calcul de charge qui passe par le point d'impact T (X1,L,Z1) du rayon i et la ligne q de calcul de charge qui passe par le point d'impact R (L,Y2,Z2) du rayon j appartiennent au même plan incliné, ont le même indice p ou q et comme le montre les figures 4 et 5, le même angle de pente en valeur absolue :

$$p = q \; ; \gamma_p = \gamma_q = Arctg\left(\frac{p \times R_h}{D+L+\ell}\right) \; ; p = 1 \rightarrow m = \frac{h}{R_h}$$

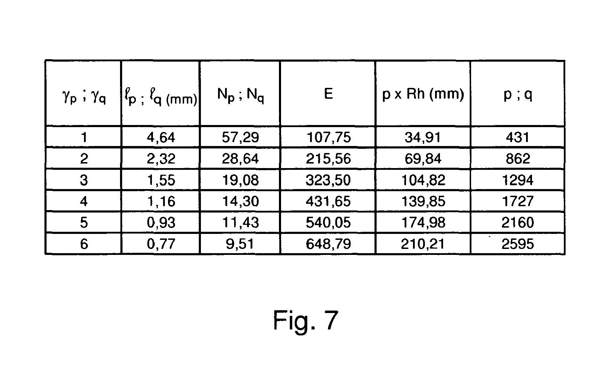

A titre d'exemple numérique, on considère la géométrie illustrée par les figures 1 à 5 dans laquelle D = 150 cm ; L = $\ell$ = h = 25 cm ; $R_h$ = $R_\ell$ = 81 $\mu$m. Le tableau de la figure 7 indique, pour différents angles de pente $\gamma_p$ ou $\gamma_q$, les largeurs de marche $\ell_p$ ou $\ell_q$, les nombres $N_p$ ou $N_q$ de points de détection par marche et le nombre E de marches par escalier. Le tableau indique également la hauteur atteinte par les deux lignes de calcul de charge, respectivement sur le bord droit de l'un des détecteurs et sur le bord gauche de l'autre détecteur, et l'indice p ou q de ces deux lignes, obtenu par arrondi à la valeur entière la plus proche de la hauteur atteinte rapportée à la résolution spatiale $R_h$ du détecteur dans le sens de la hauteur. L'indice p ou q est ainsi égal à la hauteur en points de détection ou en pixels, atteinte par les deux lignes de calcul de charge respectivement sur le bord droit de l'un des détecteurs et sur le bord gauche de l'autre détecteur.

La base de correspondance géométrique pré- calculée à l'étape (1) et les m premières et m deuxièmes lignes de calcul de charge pré- construites à l'étape (2) sont utilisées à l'étape (3) de programmation de l'ordinateur pour calculer le coefficient d'atténuation C en n'importe quel point P0 du corps à examiner.

Il faut considérer à présent que le point P0 du corps à examiner, par exemple un point du rein d'un individu, occupe sur la figure 1, la position du point générique G dans le volume irradié par les faisceaux. Le corps à examiner se trouve simultanément dans la position angulaire $\theta_a$ vis-à-vis de l'ensemble foyer F1 - détecteur et dans la position angulaire $\theta_b$ vis-à-vis de l'ensemble foyer F2 - détecteur. L'ordinateur recherche dans la base de correspondance géométrique les premier $T^{(a)}$ et deuxième $R^{(b)}$ points d'impact du point P0, appelle la donnée $c^{(a)}$ provenant de l'intensité détectée au premier point d'impact $T^{(a)}$ sous la première position angulaire $\theta_a$, appelle la donnée $\rho^{(b)}$ provenant de l'intensité détectée au deuxième point d'impact $R^{(b)}$ sous la deuxième position angulaire $\theta_b$, recherche la ligne p de calcul de charge $T_{p,k}^{(a)}; k = 1 \rightarrow n$ qui passe le plus près du premier point d'impact $T^{(a)}$ et calcule la charge $\sum_{k=1}^{n} c_{p,k}^{(a)}$ associé à ce point d'impact, recherche la ligne q de calcul de charge $R_{q,u}^{(b)}; u = 1 \rightarrow n$ qui passe le plus près du deuxième point d'impact $R^{(b)}$ et calcule la charge $\sum_{u=1}^{n} \rho_{q,u}^{(b)}$ associée à ce point d'impact, et finalement calcule la valeur du coefficient d'atténuation C au point P0 considéré sous la paire de positions angulaires considérées $\theta_a$ et $\theta_b$.

De préférence, l'ordinateur 13 est programmé pour effectuer l'étape (3) à l'aide de deux étapes supplémentaires suivantes.

D'une part, la position sur l'un des détecteurs 9 d'un premier point de référence $T^*$ est pré- calculée. Ce point de référence $T^* (\ell, L, Z^*)$ est, figure 5, à l'intersection du bord droit du détecteur, pris pour échelonner les valeurs discrètes des angles de pente $\gamma_p$ des m premières lignes de calcul de charge $T_{p,k}; k = 1 \rightarrow n; p = 1 \rightarrow m$ et de la droite passant par le premier point géométrique de convergence S1 (-(D+L)L,0) et par le premier point d'impact $T$ (X1,L,Z1). Au premier point d'impact $T$ est associée la charge calculée le long de la ligne indicée p de calcul de charge qui passe au plus près du point de référence $T^*$ compte tenu de la résolution spatiale $R_h$ du détecteur dans le sens de la hauteur.

D'autre part, la position sur l'autre détecteur 9 d'un deuxième point de référence $R^*$ est également pré- calculée. Ce point de référence $R^* (-\ell, L, Z^*_2)$ est, figure 6, à l'intersection du bord gauche de l'autre détecteur 9, pris pour échelonner les valeurs discrètes des angles de pente $\gamma_q$ des m deuxièmes lignes de calcul de charge $R_{q,u}; u = 1 \rightarrow n; q = 1 \rightarrow m$ et de la droite passant par le deuxième point géométrique de convergence S2 (D+L,L,0) et par le deuxième point d'impact $R$ (L,Y2,Z2). Au deuxième point d'impact $R$ est associée la charge calculée le long de la ligne indicée q de calcul de charge qui passe par le point de référence $R^*$ compte tenu de la résolution spatiale $R_h$ du détecteur dans le sens de la hauteur.

Etant donné que les deux points d'impact $T$ (X1,L,Z1) et $R$ (L,Y2,Z2) appartiennent au même plan incliné, les indices p et q des deux lignes de charge sont égaux de même que l'altitude $Z^*_1$ du premier point de référence $T^*$ et celle $Z^*_2$ du deuxième point de référence $R^*$. Cette altitude est donnée par la formule :

$$\frac{Z^*_1}{Z} = \frac{Z^*_2}{Z} = \frac{\ell + L + D}{X + Y + D}$$

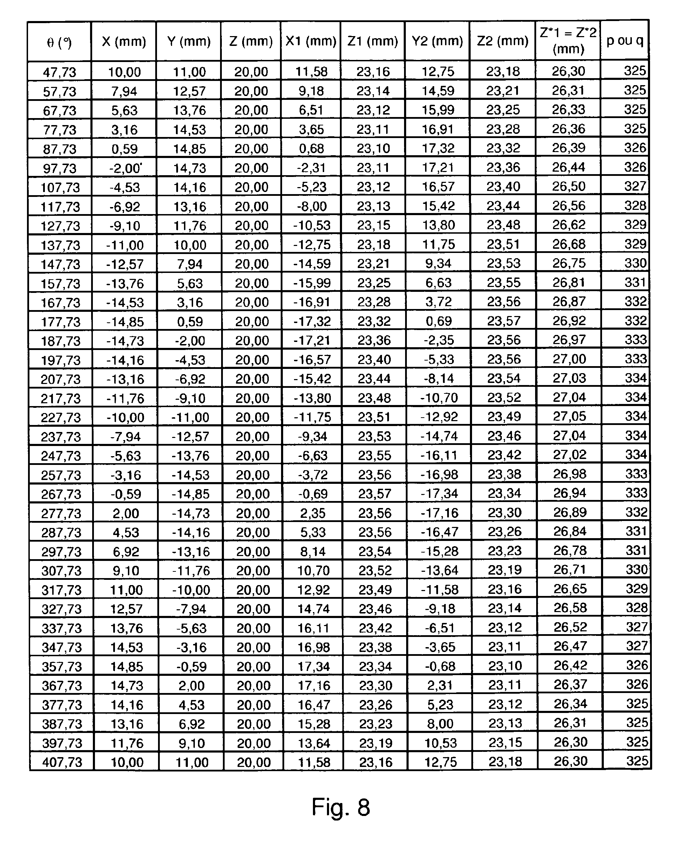

En poursuivant l'exemple numérique précédent, le tableau de la figure 8 indique les rapports entre les coordonnées du point générique G (X,Y,Z), celles des deux points d'impact T (X1,L,Z1) et R (L,Y2,Z2), l'altitude Z* des point de référence correspondant $T^*$ et $R^*$ et l'indice p ou q des deux lignes de calcul de charge passant au plus près des deux points de référence, pour une succession de positions angulaires $\theta$ du point générique G allant de 10 degrés en 10 degrés autour de l'axe de rotation $\Omega$. L'indice p ou q est obtenu par arrondi à la valeur entière de la plus proche de l'altitude Z* rapportée à la résolution spatiale $R_h$ du détecteur dans le sens de la hauteur.

Il faut relever que le calcul du coefficient d'atténuation C est effectué pour des points d'impact et des lignes de calcul de charge associées à ces points qui tous appartiennent au plan porté par les deux rayons i et j se coupant au point P0 considéré, à la résolution spatiale près des détecteurs suivant le sens de la hauteur. Ce plan prenant selon le point P0 considéré dans le volume d'irradiation, n'importe quelle inclinaison vis-à-vis de l'axe de rotation Ω, le procédé selon l'invention s'affranchit d'un calcul du coefficient d'atténuation limité à un plan de coupe perpendiculaire à l'axe de rotation et apporte ainsi une imagerie par spatiodensitométrie.

A l'étape (4), le calcul du coefficient d'atténuation C au point P0 pour la paire des positions angulaires $\theta_a$ et $\theta_b$ est recommencé pour les différentes paires de positions angulaires obtenues par la rotation simultanée des deux ensembles source - détecteur autour de l'axe de rotation Ω. Alternativement, les différentes paires de positions angulaires sont obtenues en laissant fixes les deux ensembles source - détecteur et en faisant tourner le corps à examiner et son support autour de l'axe de rotation Ω. Enfin à l'étape (5), on recommence le calcul de la valeur moyenne du coefficient d'atténuation en n'importe quel point du corps à examiner inscrit dans le volume d'irradiation. Le procédé selon l'invention permet ainsi de suivre un point P0 quelconque du corps à examiner inscrit dans le volume d'irradiation pour aboutir à une valeur moyenne du coefficient d'atténuation en ce point.

De préférence, l'ordinateur 13 est programmé pour effectuer l'étape (5) à l'aide des étapes supplémentaires suivantes.

Premièrement, les termes d'un premier et d'un deuxième vecteur de charge sont pré-calculés pour les deux positions angulaires $\theta_a$ et $\theta_b$ de chacune des différentes paires de positions angulaires obtenues par la rotation des deux ensembles source - détecteur. Pour chaque paire, les m termes du premier vecteur et du deuxième vecteur de charge sont donnés par les charges $\sum\limits_{k=1}^{n} c_{p,k}^{(a)}$ et $\sum\limits_{u=1}^{n} \rho_{q,u}^{(b)}$ le long des m premières et des m deuxièmes lignes de calcul de charge.

Deuxièmement, lors du calcul du coefficient d'atténuation de n'importe quel point P0 de l'ensemble considéré, les termes des deux vecteurs de charge pré-calculés le long des deux lignes de calcul de charge qui passent au plus près des deux points d'impact $T^{(a)}$ et $R^{(b)}$ du point P0, sous chacune des différentes paires de positions angulaires, sont simplement appelés sans être recalculés d'un point P0 à un autre point P0 de l'ensemble considéré.

Par ces étapes supplémentaires, on simplifie l'exécution de l'étape (5) de deux façons. D'une part, on calcule une fois pour toutes les charges de tous les points P0 dont les deux points d'impact $T^{(a)}$ et $R^{(b)}$ appartiennent à un même plan incliné et possèdent ainsi le même terme du premier vecteur de charge et le même terme du deuxième vecteur de charge. D'autre part, on appelle ou rappelle les termes pré-calculés des vecteurs de charge pour tout autre ensemble de points considérés, par exemple lors de l'examen d'une autre partie du corps d'un individu, ou pour le même ensemble de points considérés mais à un autre moment de la vie de l'individu.

A noter que les deux détecteurs 9 reçoivent des rayons i et j dont la longueur varie en fonction de la position des points d'impact par rapport à la position des foyers F1 et F2. Une correction est apportée aux données provenant des intensités détectées, en majorant la valeur en un point d'impact par référence au point central M en la multipliant par le rapport du carré des longueurs du foyer F1 ou F2 au point d'impact à la longueur minimale, c'est-à-dire celle qui relie le foyer F1 ou F2 au point central M. Il faut également tenir compte de l'allongement du rayon qui crée une augmentation de la dose apparente. On prendra comme coefficient de correction soit la racine carrée de la valeur indiquée ci-dessus, soit plus simplement une valeur égale à 1 +e/2 au lieu de 1+e.

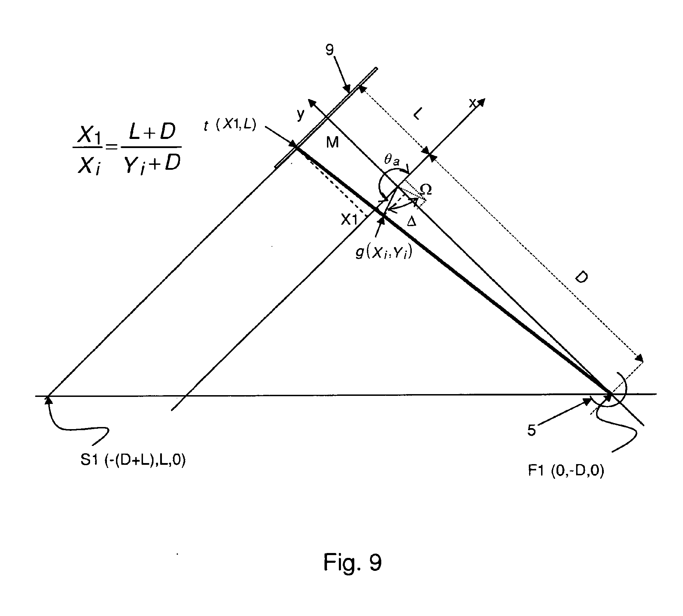

L'exposé de l'invention est poursuivi en référence à un dispositif d'imagerie à rayons X ne comportant qu'un ensemble source - détecteur. Figure 9, le foyer F1 de la source 5 est disposé sur l'axe y, à la distance D du centre O. Le détecteur 9 est disposé perpendiculairement à l'axe y à la distance L du centre O. Il s'étend sur une largeur égale à 2l et sur une hauteur égale à 2h.

Bien que non représenté sur la figure 9, le support destiné à recevoir le corps à examiner est monté mobile en rotation autour de l'axe de rotation Ω pour explorer le corps à examiner sous différentes positions angulaires θ. Alternativement, on monte l'ensemble source - détecteur mobile en rotation autour de l'axe de rotation Ω.

Le rayon i issu du foyer F1 et passant par le point générique G de coordonnées $(X_i, Y_i, Z)$ frappe le détecteur 9 au point d'impact T de coordonnées (X1,L,Z1), En ce point d'impact, la donnée provenant de l'intensité détectée par le détecteur est c. L'altitude Z1 se calcule par la formule suivante :

$$\frac{Z_1}{Z} = \frac{L+D}{Y_i+D} = k_1$$

De même, après la rotation d'angle $\Delta$ du point générique G autour de l'axe de rotation Ω, le rayon j issu du foyer F1 et passant par le point générique G de coordonnées $(X_j,Y_j,Z)$ frappe le détecteur 9 au point d'impact R de coordonnées (X2,L,Z2). En ce point d'impact, la donnée provenant de l'intensité détectée par le détecteur est p. L'altitude Z2 se calcule par la formule suivante :

$$\frac{Z2}{Z} = \frac{L+D}{Y_j+D} = k_2$$

Les deux rayons i et j passant par le point générique G se déduisent l'un de l'autre par la rotation du point générique G autour de l'axe de rotation $\Omega$, l'angle de cette rotation étant égal à 90 degrés, c'est à dire à l'écart angulaire $\Delta$ entre les deux positions angulaires $\theta_a$ et $\theta_b$ des différentes paires de positions angulaires du corps à examiner 3 autour de l'axe de rotation $\Omega$.

Figure 9, le point générique G $(X_i,Y_i,Z)$ et le point d'impact T (X1,L,Z1) du rayon i sur le détecteur se projettent dans le plan de référence respectivement aux points g $(X_i,Y_i,0)$ et t (X1,L,0). Le rayon i issu du foyer F1 et passant par le point générique G se projette dans le plan médian pour passer par les points projetés g $(X_i,Y_i,0)$ et t (X1,L,0). La coordonnée X1 du point d'impact T se calcule alors par une formule analogue à celle de l'altitude Z1 :

$$\frac{X_1}{X_i} = \frac{L+D}{Y_i+D} = k_1$$

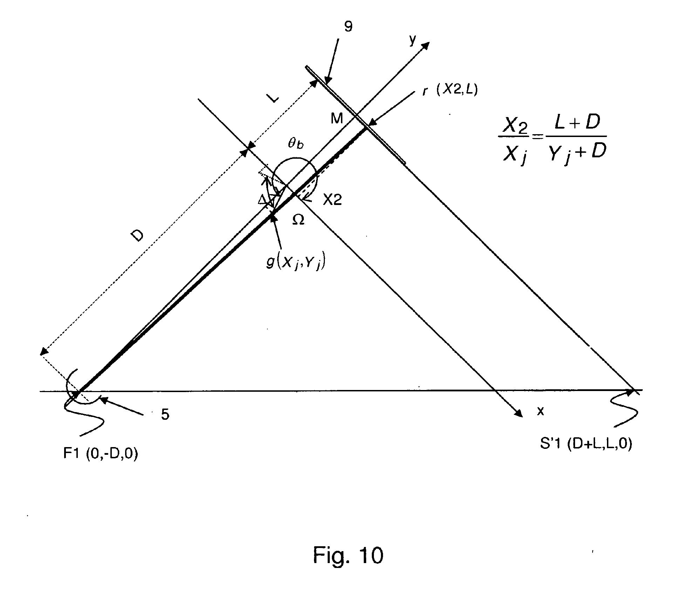

De même, figure 10, le point générique G $(X_j,Y_j,Z)$ et le point d'impact R (X2,L,Z2) du rayon j sur le détecteur se projettent dans le plan médian respectivement aux points g $(X_j,Y_j,0)$ et r (X2,L,0). Le rayon j issu du foyer F2 et passant par le point générique G se projette dans le plan de référence pour passer par les points projetés g (X,Y,0) et r (X2,L,0). La coordonnée Y2 du point d'impact R se calcule alors par une formule analogue à celle de l'altitude Z2 :

$$\frac{X_2}{X_j} = \frac{L+D}{Y_j+D} = k_2$$

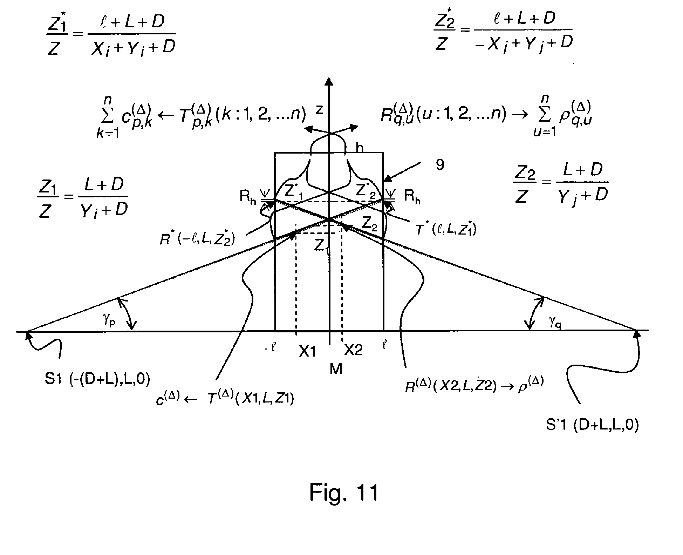

Figure 11, le détecteur 9 est représenté de face, sur une mi-hauteur. Conventionnellement, on définit le côté gauche, respectivement droit, du détecteur par le côté qui s'étend à gauche, respectivement à droite, de l'axe de rotation $\Omega$ projeté sur le détecteur par le faisceau émis par le foyer F1.

Le rayon i passe par le point générique G $(X_i,Y_i,Z)$ et frappe le détecteur au point d'impact T (X1,L,Z1). La ligne de calcul de charge indicée p qui passe au plus près de point d'impact est constituée par les n points de détection

$T_{p,k}^{(\Delta)}; k = 1 \rightarrow n$.

La ligne de calcul de charge se prolonge vers la gauche au-delà du détecteur pour converger vers le point géométrique S1 dont les coordonnées sont (-(D+L),L,0). De préférence, la position sur le détecteur 9 d'un premier point de référence $T^*$ est pré- calculée. Ce point de référence $T^*$ $(\ell, L, Z_1^*)$ est, figure 11, à l'intersection du bord droit du détecteur, pris pour échelonner les valeurs discrètes des angles de pente $\gamma_p$ des m premières lignes de calcul de charge

$T_{p,k}^{(\Delta)}; k = 1 \rightarrow n; p = 1 \rightarrow m$ ; $K = 1 \rightarrow$ n; $p = 1 \rightarrow m$ et de la droite passant par le premier point géométrique de convergence S1 (-(D+L)L,0) et par le premier point d'impact T (X1,L,Z1). Au premier point d'impact T est associée la charge $\sum_{k=1}^{n} c_{p,k}^{(\Delta)}$ calculée le long de la ligne de calcul de charge indicée p qui passe au plus près du point de référence

$T^*$ compte tenu de la résolution spatiale $R_h$ du détecteur dans le sens de la hauteur.

De même, Le rayon j passe par le point générique G $(X_j,Y_j,Z)$ et frappe le détecteur au point d'impact R $(X2,L, Z2)$. La ligne de calcul de charge indicée q qui passe au plus près de point d'impact est constituée par les n points de détection $R_{q,u}^{(\Delta)}; u = 1 \to n$. La ligne de calcul de charge se prolonge vers la droite au-delà du détecteur pour converger vers le point géométrique S'1 dont les coordonnées sont (D+L,L,0). De préférence, la position le détecteur 9 d'un deuxième point de référence $R^*$ est pré- calculée. Ce point de référence $R^* (-\ell,L, Z^*_2)$ est, figure 11, à l'intersection du bord gauche du détecteur, pris pour échelonner les valeurs discrètes des angles de pente $\gamma_q$ des m deuxièmes lignes de calcul de charge $R_{q,u}^{(\Delta)}; u = 1 \to n; q = 1 \to m$, avec la droite passant par le deuxième point géométrique de convergence S'1 (D+L,L,0) et par le deuxième point d'impact R $(X2,L,Z2)$. Au deuxième point d'impact $R$ est associée la charge $\sum_{u=1}^{n} \rho_{q,u}^{(\Delta)}$ calculée le long de la ligne de calcul de charge indicée q qui passe au plus près du point de référence $R^*$ compte tenu de la résolution spatiale $R_h$ du détecteur dans le sens de la hauteur.

A la résolution spatiale près du détecteur dans le sens de la hauteur, les m premières et m deuxièmes lignes de calcul de charge marquent la trace sur le détecteur de m plans portés par tout couple de rayons i et j issus du foyers F1 passant par le point générique G et se déduisant l'un de l'autre par la rotation d'angle Δ du point générique G autour de l'axe de rotation Ω. Pour un tel couple de rayons i et j, la ligne p de calcul de charge qui passe par le point d'impact T $(X1,L,Z1)$ du rayon i et la ligne q de calcul de charge qui passe par le point d'impact R $(X2,L,Z2)$ du rayon j appartiennent au même plan incliné, ont le même indice p ou q, le même angle de pente en valeur absolue, comme le montre la figure 11. De même, les deux points de références $T^* (\ell,L, Z^*_1)$ et $R^* (-\ell,L, Z^*_2)$ ont la même altitude $Z^*$, ou $Z^*_2$.

Il convient de noter que dans les modes de réalisation décrits précédemment, l'écart angulaire angle Δ entre les deux positions angulaires $(\theta_a,\theta_b)$ des différentes paires de positions angulaires du corps à examiner ou de l'ensemble source - détecteur autour de l'axe de rotation Ω est égal à 90°. Cependant, l'exposé général de l'invention s'appuie sur un écart angulaire Δ qui peut être différent de 90°. Considérer des paires de positions angulaires non perpendiculaires offre l'avantage de conduire à une réduction du nombre de prises de vue et donc de la dose d'irradiation. On sait en effet que 20 prises de vue espacées de 18° conduisent à 20 paires de positions angulaires perpendiculaires. Si l'on considère, autour de chaque paire perpendiculaire, par exemple 0°-90°, une paire aigue, par exemple 0°-72° et une paire obtuse, par exemple 0°-108°, on multiplie par trois le nombre de paires par rapport au nombre de prises de vue. Ce qui revient à augmenter le nombre d'estimations du coefficient d'atténuation en un point donné, sans augmenter le nombre de prises de vues.

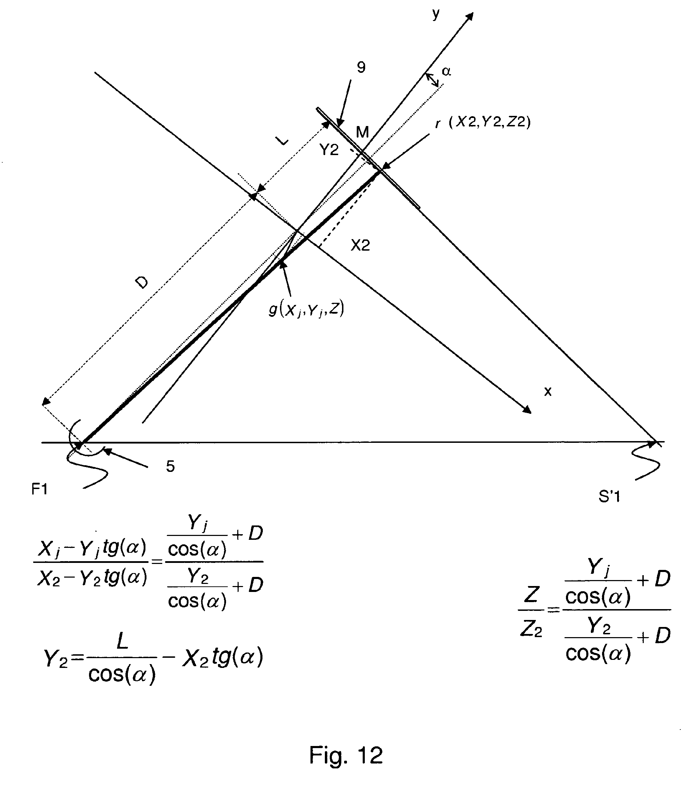

Il faut toutefois noter que les formules permettant de calculer les coordonnées du point d'impact T $(X1,Y1,Z1)$ issu du rayon i ou du point d'impact R $(X2,Y2,Z2)$ issu du rayon j, se généralisent au cas où l'écart angulaire Δ entre deux positions angulaires est différent de 90°. La figure 12 est une vue dans ie plan O,x,y de la géométrie du dispositif illustré par la figure 9, un point générique G ayant effectué une rotation Δ autour de l'axe de rotation Ω supérieure à 90° d'un angle α. Sur cette figure, on a reporté les formules permettant de calculer les coordonnées $(X2,Y2,Z2)$ du point d'impact R issu du rayon j, en fonction de l'angle α. On contrôle que lorsque l'angle α tend vers zéro, les coordonnées $(X2,Y2,Z2)$ sont égales à celles indiquées par les formules de la figure 10 et de la figure 11.

A noter également que dans le cas où un rayon ne traverse pas l'objet à examiner, une valeur nulle est lue sur le détecteur au point d'impact du rayon. En réalité, même dans l'air, le rayon subit une certaine atténuation et il faut considérer comme nulles toutes les valeurs inférieures à un certain seuil pour tenir compte de l'absorption par l'air. Si en un point du détecteur, on lit une valeur inférieure à ce seuil, on admet que la valeur est nulle et que, dans ces conditions, toutes les valeurs sont nulles le long du rayon. Si autre rayon passe par l'un de ces points dont la valeur est nulle, il est prévu de ne répartir la valeur lue au point d'impact de cet autre rayon que sur les points où les valeurs sont non nulles. Si bien que la valeur lue sur le détecteur doit être divisée par n-1 et non par n. De même, la charge associée au point d'impact doit être calculée en sommant les n-1 valeurs non nulles.

Le calcul recherche d'abord les valeurs considérées comme nulles sur chaque vecteur détecté ou sur chaque image primaire obtenue. Ensuite, on procède ainsi :

- dans l'estimation fondée sur la lecture de deux valeurs correspondant à des rayons octogonaux, on annule purement et simplement la valeur moyenne obtenue par lecture des deux détecteurs octogonaux pour ce point ;

- dans la somme cumulée des lignes de découpe sur le plan de l'image, on divise le total non pas par $2n^2$ mais par $2(n-1)^2$. Si plusieurs points sont nuls, par exemple 4 points, on divisera par $2(n-4)^2$.

Ces ajustements ont deux effets :

- améliorer la qualité de l'image

- bien marquer les bords d'un objet solide.

Il serait utile lorsque l'on fonde le calcul sur une moyenne de 36 images de commencer la recherche des points nuls, d'en tenir compte pour le terme correcteur puis au fur et à mesure que l'on explore des points dans l'espace d'en tenir compte pour les valeurs de référence même si cela complique légèrement le calcul, l'amélioration qui en résultera vaudra le supplément de coût.

Dans la mesure où des valeurs nulles peuvent apparaître à lors du traitement d'une quelconque des prises de vues, par exemple 36, il est prévu de refaire un ou plusieurs cycles supplémentaires de calculs dans des conditions différentes pour tenir compte des résultats du cycle antérieur. On améliore la qualité de l'information en choisissant un autre type de nuages de points à chacune des 36 prises de vues. Par exemple, le premier nuage de points est choisi dans des plans horizontaux parallèles. Le deuxième nuage est choisi dans des plans verticaux en passant par l'axe de rotation. On obtient ainsi 72 estimations de coefficients d'atténuation de chaque point et on peut vérifier la qualité des résultats par l'analyse de l'écart type et du taux d'erreur pour 72 points. Le cas échéant, on peut prendre un autre mode de découpage, par exemple par des plans verticaux parallèles ou en utilisant une série de plans obliques à 45° sur l'axe de rotation. L'avantage est ainsi de multiplier les observations en partant des mêmes données sans multiplier le nombre de prises de vues. Il en résulte un coût de traitement plus élevé mais une amélioration de la qualité des résultats. Il est donc possible de mettre en évidence plus facilement des zones creuses à l'intérieur même de l'objet examiné et pas seulement à l'extérieur. Ceci peut être encore amélioré en abaissant le seuil de la valeur considérée comme nulle.

L'exposé de l'invention est poursuivi par la description de deux dispositifs spécialement conçus pour la mise en oeuvre du procédé d'imagerie à rayons X.

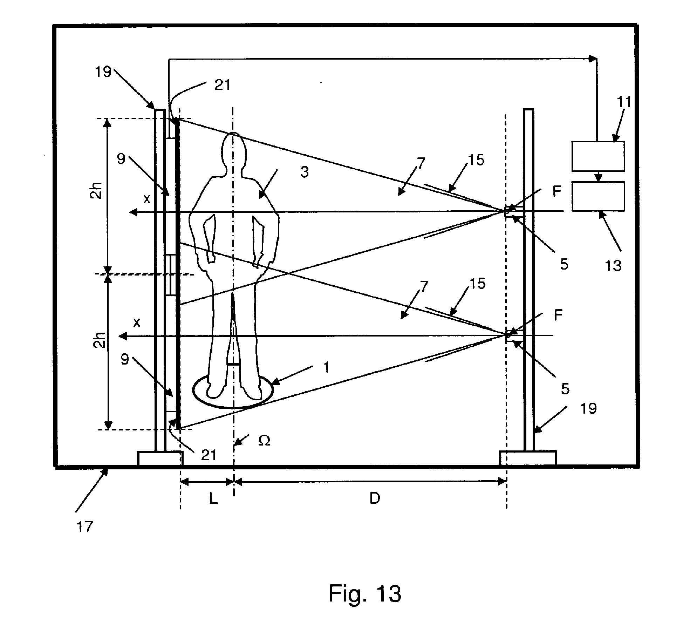

Le premier dispositif, figure 13, est un scanner dit « intégral » permettant en un seul passage d'obtenir les images initiales d'un patient de la tête aux pieds. Ce dispositif comprend dans une cabine 17 de 220 cm de hauteur :

- un support 1 pour recevoir un patient 3 à examiner, monté mobile en rotation autour d'un de rotation $\Omega$,

- deux sources 5 alimentant deux foyers F émettant deux faisceaux 7 de rayons X,

- deux détecteurs 9 irradiés par les faisceaux pour détecter une intensité atténuée en fonction d'une traversée des rayons X à travers le patient 3, et

- un convertisseur analogique-numérique 11 pour convertir les intensité détectées en données pour aboutir à une image exprimant un coefficient d'atténuation des rayons X en un ensemble de points P0 du patient.

Les deux sources 5 et les deux détecteurs 9 sont fixés à des supports 19 de la cabine 17 et forment deux ensembles superposés suivant la hauteur du dispositif, c'est-à-dire parallèlement à l'axe de rotation $\Omega$. Ils réalisent chacun une géométrie telle qu'elle a été décrite en référence aux figures 6 à 8. Ainsi les foyers F sont disposés sur les axes x perpendiculairement aux détecteurs 9. Ces derniers s'étendent sur une hauteur 2h égale à 110 cm. Ils comprennent une ou plusieurs barrettes de détection 21 montées mobiles en translation parallèlement aux axes y pour couvrir une zone de détection égale en largeur 21 à 60 cm. La distance D entre les foyers F et l'axe de rotation $\Omega$ est égale à 150 cm. La distance L entre les détecteurs 9 et l'axe de rotation $\Omega$ est égale à 30cm.

Le patient 3 se tient debout sur le support 1 et est immobilisé par des tubes transparents verticaux non représentés sur la figure 12.

Les deux sources 5 sont par exemple constituées par deux tubes à rayons X à grand angle d'ouverture, par exemple 40° ou 56 °. Si l'on prend par exemple un angle d'ouverture totale de 40°, à 180 cm de distance, une hauteur de 131 cm peut être irradiée. En plaçant les deux tubes à des hauteurs convenables, on peut irradier une hauteur supérieure à 2 m avec un chevauchement. Ce chevauchement pourra être annulé par des procédés informatiques, ou réduit au minimum en plaçant une plaque horizontale en acier et plomb à mi-hauteur du détecteur. On laissera un léger espace entre cette plaque et le détecteur de sorte à limiter le chevauchement à un petit nombre de lignes facilement détectables.

Sur chaque tube est fixé un concentrateur 15 en tronc de pyramide par exemple pour augmenter la densité surfacique de puissance d'irradiation sur le détecteur 9. Devant ce concentrateur coulisse une plaque, non représentée sur la figure 13, étanche aux rayons X comprenant une fente verticale dont la largeur sera par exemple égale à 2,5 mm. On déplace simultanément le détecteur 9 et la plaque à fente verticale pour limiter l'irradiation à la barrette de détection du détecteur dont la dimension est de l'ordre de 6,6 mm. Dans ces conditions, la dose de rayons X reçue par le patient 3 est limitée par le temps de passage de la fente verticale. En pratique, aucun point du patient 3 n'est atteint pendant un temps supérieur à 125 millisecondes. Les expériences ont montré que pour une hauteur de 46 cm, la dose reçue par le patient est largement inférieure à 100 micro grays par prise de vue.

Le fonctionnement est le suivant. On place le patient 3 dans une première position angulaire $\theta_1$ et on prend une image intégrale en activant les deux détecteurs et les deux tubes, ou une image partielle en activant un détecteur et un tube. Si le détecteur comprend plusieurs barrettes de détection 21, on déplace une ou plusieurs de ces barrettes en fonction de la zone du patient à explorer.

On fait tourner le patient de 10° ou 18° et l'on prend une deuxième image dans un deuxième position angulaire $\theta_2$ et ainsi de suite jusqu'à obtenir 36 ou 20 images décalées régulièrement sur 360°. Ces 36 images serviront au calcul des valeurs des coefficients d'atténuation en tout point P0 du patient choisi à l'avance selon le procédé décrit précédemment. Dans la pratique, on réalisera par exemple un ensemble de 36 images de référence de l'ensemble du patient qui pourront être conservées pour des usages ultérieurs. Ces images auront une définition de base de 81 microns, c'est-à-dire une résolution spatiale $R_h$ en hauteur et une résolution spatiale $R_\ell$ en largeur égales à 81 microns. On pourra aussi réaliser une image de l'ensemble du patient à 162 microns de définition et, pour un volume restreint, par exemple l'orbite, le coeur, le foie, le rein etc..., réaliser une image à 81 microns.

Avec un système informatique comprenant 40 PC mis en parallèle, on peut traiter 125 méga pixels par seconde, ce qui autorise de scanner un patient à 1 mm de définition en moins d'une seconde. A 81 microns, le temps de calcul global sera de l'ordre de 1128 secondes. A 162 microns, il sera de l'ordre de 141 secondes. De manière standard, on pourra ainsi scanner un individu de la tête aux pieds en 4 minutes de prise de vue à 81 microns et restituer une image à 162 microns en moins de 2 minutes. L'examen d'une partie du patient ayant un volume de 125 cm3, par exemple une orbite oculaire, le temps de calcul à 81 microns sera de l'ordre de 1,6 seconde.

En définitive, la réalisation d'un scanner intégral permettra au radiologue de travailler dans les conditions suivantes :

- prise de vue en 4 minutes, ce qui autorise de traiter 6 à 10 patients par heure de manière acceptable mais qui suppose une bonne planification des opérations,

- restitution d'une image totale à 162 microns, en moins de 2 minutes,

- restitution d'une image partielle, par exemple l'orbite, le coeur, le foie ou l'articulation du genou, avec possibilité d'amplifier les contrastes, dans des temps de quelques dizaines de seconde.

La concomitance pratique de la prise de vue et du calcul autorise le radiologue à rédiger son rapport en temps réel, en se fondant sur des images à haute définition globales ou partielles selon les besoins. Par exemple, pour vérifier la présence d'un cancer secondaire dans les os, on réalise une image intégrale à 162 microns, sans amplification de contraste.

Le dispositif qui vient d'être décrit comprend un ordinateur 13 programmé pour effectuer les étapes du procédé selon l'invention. Plus particulièrement, l'ordinateur 13 est pourvu d'une mémoire de masse pour stocker les positions des deux points d'impacts T et R de tout point générique G d'un volume irradié pouvant contenir un être humain. Si l'on considère un cylindre ayant une hauteur de 2 m et un rayon de 30 cm, à la définition de 81 microns, le nombre de positions du point générique est égal à $1,06 \cdot 10^{12}$ et le nombre de points d'impact à $2,12 \cdot 10^{12}$. En fonction de la partie du patient dont l'imagerie X est recherchée, l'ordinateur prélève dans la mémoire de masse l'information pertinente, savoir les positions des points d'impact T et R des différents points P0 de la partie du patient à examiner, et les transfère à une mémoire à accès direct de l'ordinateur.

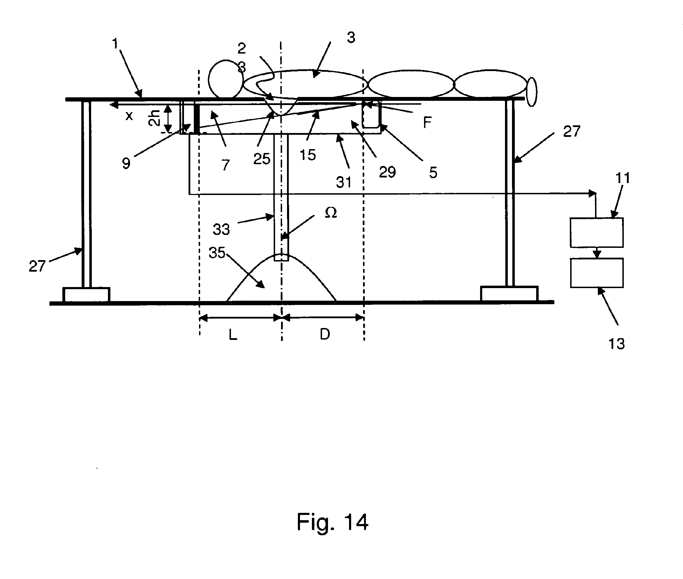

Le deuxième dispositif, figure 14, est un scanner pour l'imagerie X du sein. Ce dispositif comprend :

- une table d'examen 1 pour recevoir une patiente 3 à examiner, munie d'une ouverture 23 pour permettre le logement du sein de la patiente dans une coquille 25 transparente aux rayons X et destinée à comprimer légèrement le sein, ou à l'aspirer légèrement pour que la peau vienne au contact de la coquille et ainsi immobiliser le sein,

- une source 5 alimentant un foyer F émettant un faisceau 7 de rayons X,

- un détecteur 9 irradié par le faisceau pour détecter une intensité atténuée en fonction d'une traversée des rayons X à travers le sein du patient 3, et

- un convertisseur analogique-numérique 11 pour convertir les intensités détectées en données pour aboutir à une image exprimant un coefficient d'atténuation des rayons X en un ensemble de points P0 du sein de la patiente.

La table d'examen 1 est portée par deux supports 27. La source 5 et le détecteur 9 forment un ensemble mobile autour d'un axe de rotation Ω. Ils sont fixés à une cage 29 de forme cylindrique à base circulaire 31 actionnée en rotation par l'intermédiaire d'un arbre 33 et d'un moteur 35. La cage comprend une paroi supérieure, une paroi inférieure et une paroi latérale fabriquées en plomb pour être imperméables aux rayons X et empêcher leur propagation à l'extérieur. Ils réalisent une géométrie telle qu'elle a été décrite en référence aux figures 6 à 8, dans laquelle l'ensemble source - détecteur est mobile et le support fixe. La source 5 est par exemple un tube de faible puissance, typiquement de quelques milliampères sous une tension de 75 kV. Le foyer F est disposé sur l'axe x perpendiculairement au détecteur 9. Ce dernier est constitué d'une plaque de détection 37 de 23 cm de hauteur et de 30 cm de largeur et possède une définition de 162 microns. La distance D entre le foyer F et l'axe de rotation Ω est égale à 37,5 cm. La distance L entre le détecteur 9 et l'axe de rotation Ω est aussi égale à 37,5 cm.

Dans l'exemple de la figure 14, le foyer F est disposé de préférence dans un plan perpendiculaire à l'axe de rotation Ω et passant par le sommet S du détecteur 9 disposé juste au dessous de la table d'examen 1. Cet agencement en demi-champ permet d'irradier le sein sur une grande hauteur sans trop augmenter l'angle d'ouverture du concentrateur 15 fixé au tube à rayons X. Mais on peut également disposer le foyer F dans le plan médian, c'est-à-dire dans le plan perpendiculaire à l'axe de rotation Ω et passant à mi-hauteur du détecteur.

Le fonctionnement est le suivant. Dans une première position angulaire $\theta_1$ de l'ensemble source - détecteur, on prend une première image. On fait tourner la cage de 10° ou 18° et l'on prend une deuxième image dans un deuxième position angulaire $\theta_2$ et ainsi de suite jusqu'à obtenir 36 ou 20 images décalées régulièrement sur 360°. Ces 36 images serviront au calcul des valeurs des coefficients d'atténuation en tout point P0 du sein de la patiente. On réalisera par exemple un ensemble de 36 images de référence de l'ensemble du sein qui pourront être conservées pour des usages ultérieurs. A noter que chaque image ayant, dans l'exemple cité précédemment, une largeur de 30 cm, les 36 images se chevauchent.

Le dispositif qui vient d'être décrit comprend un ordinateur 13 programmé pour effectuer les étapes du procédé selon l'invention. Plus particulièrement, l'ordinateur 13 est pourvu d'une mémoire à accès rapide pour stocker les positions des deux points d'impacts T et R de tout point générique G d'un volume irradié correspondant à un sein. Si l'on considère une coquille en demi-sphère ayant un rayon de 15 cm, à la définition de 162 microns, le nombre de positions du point générique est égal à $2,8 \cdot 10^8$ et le nombre de points d'impact à $5,6 \cdot 10^8$. L'ordinateur prélève dans la mémoire à accès rapide l'information pertinente, savoir les positions des points d'impact T et R des différents points P0 du sein de la patiente et les transfère à une mémoire à accès direct de l'ordinateur.

Lorsqu'on applique le procédé selon l'invention à un organe de petite dimension comme le foie ou le coeur, des tissus proches peuvent conduire à des données voisines. Dans ces conditions, il est intéressant de réaliser un zoom de contraste basé sur le principe suivant : on considère la valeur du coefficient d'absorption en un point et on l'élève à une puissance comprise entre 1,2 et 1,8 par exemple. On illustre l'amplification de contraste comme suit : le niveau d'absorption le plus bas est égal à 10, le niveau le plus élevé est égal à 100, le contraste est égal à 10 sans amplification, et si l'on emploie un exposant égal à 1,5 le niveau le plus bas devient égal à 31,62 le niveau le plus haut égal à 1000 et l'amplification égale à 31,62.

Il convient de noter que dans les modes de réalisation décrits précédemment, le détecteur est par exemple du type à scintillateur, réseau de fibres optiques et capteur à photodiodes et le convertisseur est analogique-numérique. Cependant, l'exposé général de l'invention s'appuie sur tout type de détecteur, par exemple un film photographique radiologique. Dans ce cas, le convertisseur numérique est utilisé pour numériser le film photographique radiologique.

## Revendications

1. Procédé d'imagerie à rayons X, du type scanographie, dans lequel, un corps à examiner (3) étant reçu par un support (1),

   - on émet, à partir du foyer (F1,F2) d'une source (5), un faisceau (7) de rayons X (i,j) en direction du corps à examiner (3),
   - on détecte, à l'aide d'un détecteur (9) irradié par le faisceau, une intensité atténuée en fonction d'une traversée des rayons X à travers le corps à examiner (3), sous différentes paires de positions angulaires $(\theta_1, \theta_b)$ du corps à examiner (3) ou de l'ensemble source (5) - détecteur (9) autour d'un axe de rotation (Ω), les deux positions angulaires $(\theta_a, \theta_b)$ des différentes paires présentant un écart angulaire (Δ),
   - on convertit, à l'aide d'un convertisseur (11) numérique, les intensités détectées en données $(c^{(a)}, \rho^{(b)})$ et,
   - on traite, à l'aide d'un ordinateur programmé (13), les données $(c^{(a)}, \rho^{(b)})$ pour aboutir à une image exprimant un coefficient d'atténuation des rayons X en un ensemble de points {P0} du corps à examiner, en calculant, pour une paire de positions angulaires $(\theta_1, \theta_b)$, une valeur (C) du coefficient d'atténuation en un point (P0) de l'ensemble {P0} par application de la formule suivante :

$$C = \frac{\rho^{(b)}}{n} + \frac{c^{(a)}}{n} - \frac{1}{2n^2}\left(\sum_{k=1}^{n} c_k^{(a)} + \sum_{u=1}^{n} \rho_u^{(b)}\right)$$

dans laquelle :

$c^{(a)}$ est la donnée provenant de l'intensité détectée au point d'impact $T^{(a)}$ d'un premier rayon i passant par le point considéré (P0) dans la première position angulaire ($\theta_a$),

$\rho^{(b)}$ est la donnée provenant de l'intensité détectée au point d'impact $R^{(b)}$ d'un deuxième rayon j passant par le point considéré (P0) dans la deuxième position angulaire ($\theta_b$), $\displaystyle\sum_{k=1}^{n} c_k^{(a)}$ est la charge associée au premier point d'impact ($T^{(a)}$), définie par la somme des données ($c_k^{(a)}$) provenant des intensités détectées dans la première position angulaire ($\theta_a$), le long de (n) points ($T_k^{(a)}$) d'une première ligne de calcul de charge qui passe au plus près du premier point d'impact ($T^{(a)}$), et $\displaystyle\sum_{u=1}^{n} \rho_u^{(b)}$ est la charge associée au deuxième point d'impact ($R^{(b)}$), définie par la u=1 somme des données ($\rho_u^{(b)}$) provenant des intensités

détectées dans la deuxième position angulaire ($\theta_b$), le long de (n) points ($R_u^{(b)}$) d'une deuxième ligne de calcul de charge qui passe au plus près du deuxième point d'impact ($R^{(b)}$), **<u>caractérisé en ce que</u>** l'ordinateur (13) est programmé pour effectuer les étapes suivantes :

(1) pré- calculer, pour tout point générique (G) d'un volume irradié par le faisceau émis par la source (5), la position sur le détecteur (9) d'un premier point d'impact ($T$) d'un rayon (i) et d'un deuxième point d'impact ($R$) d'un rayon (j), les deux rayons (i) et (j) passant par le point générique (G) et se déduisant l'un de l'autre par une rotation du point générique (G) ou du de l'ensemble source (5) - détecteur (9) autour de l'axe de rotation ($\Omega$) dont l'angle est égal à l'écart angulaire ($\Delta$) entre les deux positions angulaires ($\theta_a,\theta_b$) des différentes paires de positions angulaires du corps à examiner (3) ou de l'ensemble source (5) - détecteur (9) autour de l'axe de rotation ($\Omega$),

(2) pré- calculer sur le détecteur (9) la position de (m) premières et de (m) deuxièmes lignes de calcul de charge de (n) points de détection ($T_{p,k}$; $k = 1 \rightarrow n$; $p = 1 \rightarrow m$; $R_{q,u}$;$u = 1 \rightarrow n$;$q = 1 \rightarrow m$) se prolongeant pour converger respectivement en un premier (S1) et un deuxième (S2) points géométriques dont les positions sont déterminées par la distance (D) du foyer (F1,F2) à l'axe de rotation ($\Omega$) et la distance (L) du détecteur (9) à l'axe de rotation ($\Omega$), chaque ligne (p,q) étant inclinée par rapport à l'axe de rotation ($\Omega$) d'un angle de pente ($\gamma_p,\gamma_q$) qui s'échelonne en une série de valeurs discrètes déterminées par une résolution spatiale ($R_h$) du détecteur (9) parallèlement à l'axe de rotation ($\Omega$),

(3) effectuer le calcul de la valeur (C) du coefficient d'atténuation en considérant, en fonction de la position du point (P0) dans le volume irradié par le faisceau, les positions pré- calculées des premier et deuxième points d'impact ($T^{(a)}$ ; $R^{(b)}$) et les première (p) et deuxième (q) lignes de calcul de charge pré- construites ($T_{p,k}^{(a)}$;$k = 1 \rightarrow n$ ; $R_{q,u}^{(b)}$;$u = 1 \rightarrow n$) ; qui passent au plus près des premier et deuxième points d'impact ($T^{(a)}$ ; $R^{(b)}$,

(4) recommencer l'étape (3) pour les différentes paires de positions angulaires ($\theta_a,\theta_b$) du corps à examiner (3) ou de l'ensemble source (5) - détecteur (9) autour de l'axe de rotation ($\Omega$) et calculer une valeur moyenne <C> du coefficient d'atténuation (C) au point considéré (P0) pour les différentes paires de positions angulaires, et

(5) recommencer l'étape (4) et afficher à l'écran de l'ordinateur l'image exprimant les valeurs moyennes <C> de l'ensemble {P0} des points (P0).

**2.** Procédé d'imagerie à rayons X selon la revendication 1, **caractérisé en ce que** l'ordinateur (13) est programmé pour effectuer l'étape (3) à l'aide des étapes suivantes :

(6) pré- calculer la position sur le détecteur (9) d'un point de référence ($T^*$) du premier point d'impact ($T$), défini par l'intersection de la droite passant par le premier point géométrique de convergence (S1) et par le premier point d'impact ($T$) et une ligne de points du détecteur, parallèle à l'axe de rotation $\Omega$, prise pour échelonner les valeurs discrètes des angles de pente ($\gamma_p$) des (m) premières lignes de calcul de charge ($T_{p,k}$; $k = 1 \rightarrow n$; $p = 1 \rightarrow m$) et associer au premier point d'impact ($T$), la charge calculée le long de la ligne de calcul de charge qui passe au plus près du point de référence ($T^*$), et

(7) pré- calculer la position sur le détecteur (9) d'un point de référence ($R^*$) du deuxième point d'impact ($R$), défini par l'intersection de la droite passant par le deuxième point géométrique de convergence (S2) et par le deuxième point d'impact ($R$) et une ligne de points du détecteur, parallèle à l'axe de rotation $\Omega$, prise pour échelonner les valeurs discrètes des angles de pente ($\gamma_q$) des (m) deuxièmes lignes de calcul de charge ($R_{q,u}$; $=1 \rightarrow n$; $q =1 \rightarrow m$) et associer au deuxième point d'impact ($R$), la charge calculée le long de la ligne de calcul de charge qui passe au plus près du point de référence ($R^*$).

**3.** Procédé d'imagerie à rayons X selon la revendication 1 ou 2, **caractérisé en ce que** l'ordinateur est programmé pour effectuer l'étape (2) ou les étapes (6) et (7) en considérant les points de détection alignés parallèlement à l'axe de rotation ($\Omega$) sur un bord du détecteur (9) opposé au point géométrique de convergence (S1,S2) pour échelonner les valeurs discrètes des angles de pente ($\gamma_p, \gamma_q$) des (m) premières et (m) deuxièmes lignes de calcul de charge.

**4.** Procédé d'imagerie à rayons X selon la revendication 1 ou 2, **caractérisé en ce que** l'ordinateur (13) est programmé pour effectuer l'étape (5) à l'aide des étapes suivantes :

(8) les termes d'un premier et d'un deuxième vecteur de charge, donnés par les charges

$$( \sum_{k=1}^{n} c_{p,k}^{(a)} \quad , \quad \sum_{u=1}^{n} \rho_{q,u}^{(b)} )$$ le long des (m) premières et des (m) deuxièmes lignes de calcul de charge, sont pré- calculés pour les deux positions angulaires ($\theta_a, \theta_b$) de chacune des différentes paires de positions angulaires, et

(9) le coefficient d'atténuation (C) de n'importe quel point (P0) de l'ensemble considéré est calculé en appelant les termes des deux vecteurs de charge pré- calculés le long des deux lignes de calcul de charge qui passent au plus près des deux points d'impact ($T^{(a)}, R^{(b)}$) du point (P0), sous chacune des différentes paires de positions angulaires ($\theta_a, \theta_b$).

**5.** Procédé d'imagerie à rayons X selon l'une des revendications 1 à 4, **caractérisé en ce que** la rotation d'angle ($\Delta$) définie à l'étape (1) correspond à deux positions angulaires ($\theta_a, \theta_b$) occupées successivement dans le temps du corps à examiner (3) ou de l'ensemble source (5) - détecteur (9) autour de l'axe de rotation ($\Omega$).

**6.** Procédé d'imagerie à rayons X selon l'une des revendications 1 à 4, **caractérisé en ce que** la rotation d'angle ($\Delta$) définie à l'étape (1) correspond à deux positions angulaires ($\theta_a, \theta_b$) occupées simultanément par deux ensembles sources (5) - détecteurs (9) par rapport au corps à examiner (3).

**7.** Programme d'ordinateur comprenant des instructions qui permettent à un ordinateur (13) dans lequel il est chargé et avec lequel un procédé selon l'une des revendications 1 à 6 est mis en oeuvre, de traiter les données ($c^{(a)}, \rho^{(b)}$) par application de la formule suivante :

$$C = \frac{\rho^{(b)}}{n} + \frac{c^{(a)}}{n} - \frac{1}{2n^2} ( \sum_{k=1}^{n} c_k^{(a)} + \sum_{u=1}^{n} \rho_u^{(b)} )$$

pour aboutir à une image exprimant un coefficient d'atténuation des rayons X en un ensemble de points {P0} du corps à examiner, en calculant, pour une paire de positions angulaires ($\theta_a$, $\theta_b$), une valeur (C) du coefficient d'atténuation en un point (P0) de l'ensemble {P0}, dans laquelle formule :

$c^{(a)}$ est la donnée provenant de l'intensité détectée au point d'impact $T^{(a)}$ d'un premier rayon i passant par le point considéré (P0) dans la première position angulaire ($\theta_a$),

$\rho^{(b)}$ est la donnée provenant de l'intensité détectée au point d'impact $R^{(b)}$ d'un deuxième rayon j passant par le point considéré (P0) dans la deuxième position angulaire ($\theta_b$),

$\sum_{k=1}^{n} c_k^{(a)}$ est la charge associée au premier point d'impact ($T^{(a)}$), définie par la somme des données

$(c_k^{(a)})$ provenant des intensités détectées dans la première position angulaire ($\theta_a$), le long de (n) points

$(T_k^{(a)})$ d'une première ligne de calcul de charge qui passe au plus près du premier point d'impact ($T^{(a)}$), et

$\sum_{u=1}^{n} \rho_u^{(b)}$ est la charge associée au deuxième point d'impact ($R^{(b)}$), définie par la somme des données

$(\rho_u^{(b)})$ provenant des intensités détectées dans la deuxième position angulaire ($\theta_b$), le long de (n) points

$(R_u^{(b)})$ d'une deuxième ligne de calcul de charge qui passe au plus près du deuxième point d'impact ($R^{(b)}$), **<u>caractérisé en ce que</u>** l'ordinateur (13) est programmé pour effectuer les étapes suivantes :

(1) pré- calculer, pour tout point générique (G) d'un volume irradié par le faisceau émis par la source (5), la position sur le détecteur (9) d'un premier point d'impact (T) d'un rayon (i) et d'un deuxième point d'impact (R) d'un rayon (j), les deux rayons (i) et (j) passant par le point générique (G) et se déduisant l'un de l'autre par une rotation du point générique (G) ou du de l'ensemble source (5) - détecteur (9) autour de l'axe de rotation ($\Omega$) dont l'angle est égal à l'écart angulaire ($\Delta$) entre les deux positions angulaires ($\theta_a,\theta_b$) des différentes paires de positions angulaires du corps à examiner (3) ou de l'ensemble source (5) - détecteur (9) autour de l'axe de rotation ($\Omega$),

(2) pré- calculer sur le détecteur (9) la position de (m) premières et de (m) deuxièmes lignes de calcul de charge de (n) points de détection ($T_{p,k}$; $k = 1 \to n$; $p = 1 \to m$ ; $R_{q,u}$; $u = 1 \to n$ ; $q = 1 \to m$) se prolongeant pour converger respectivement en un premier (S1) et un deuxième (S2) points géométriques dont les positions sont déterminées par la distance (D) du foyer (F1,F2) à l'axe de rotation ($\Omega$) et la distance (L) du détecteur (9) à l'axe de rotation ($\Omega$), chaque ligne (p,q) étant inclinée par rapport à l'axe de rotation ($\Omega$) d'un angle de pente ($\gamma_p,\gamma_q$) qui s'échelonne en une série de valeurs discrètes déterminées par une résolution spatiale ($R_h$) du détecteur (9) parallèlement à l'axe de rotation ($\Omega$),

(3) effectuer le calcul de la valeur (C) du coefficient d'atténuation en considérant, en fonction de la position du point (P0) dans le volume irradié par le faisceau, les positions pré- calculées des premier et deuxième points d'impact ($T^{(a)}$ ; $R^{(b)}$) et les première (p) et deuxième (q) lignes de calcul de charge pré- construites

$(T_{p,k}^{(a)}; k = 1 \to n$ ; $R_{q,u}^{(b)}; u = 1 \to n)$ qui passent au plus près des premier et deuxième points d'impact ($T^{(a)}$ ; $R^{(b)}$),

(4) recommencer l'étape (3) pour les différentes paires de positions angulaires ($\theta_a,\theta_b$) du corps à examiner (3) ou de l'ensemble source (5) - détecteur (9) autour de l'axe de rotation ($\Omega$) et calculer une valeur moyenne <C> du coefficient d'atténuation (C) au point considéré (P0) pour les différentes paires de positions angulaires, et

(5) recommencer l'étape (4) et afficher à l'écran de l'ordinateur l'image exprimant les valeurs moyennes <C> de l'ensemble {P0} des points (P0).

8. Programme d'ordinateur selon la revendication 7, **caractérisé en ce qu'**il contient des instructions pour effectuer l'étape (3) à l'aide des étapes suivantes :

(6) pré- calculer la position sur le détecteur (9) d'un point de référence ($T^*$) du premier point d'impact ($T$), défini par l'intersection de la droite passant par le premier point géométrique de convergence (S1) et par le premier point d'impact (T) et une ligne de points du détecteur, parallèle à l'axe de rotation $\Omega$, prise pour échelonner les valeurs discrètes des angles de pente ($\gamma_p$) des (m) premières lignes de calcul de charge ($T_{p,k}$; $k = 1 \rightarrow n$; $p = 1 \rightarrow m$) et associer au premier point d'impact (T), la charge calculée le long de la ligne de calcul de charge qui passe au plus près du point de référence ($T^*$), et

(7) pré- calculer la position sur le détecteur (9) d'un point de référence ($R^*$) du deuxième point d'impact ($R$), défini par l'intersection de la droite passant par le deuxième point géométrique de convergence (S2) et par le deuxième point d'impact (R) et une ligne de points du détecteur, parallèle à l'axe de rotation $\Omega$, prise pour échelonner les valeurs discrètes des angles de pente ($\gamma_q$) des (m) deuxièmes lignes de calcul de charge ($R_{q,u}$; $u = 1 \rightarrow n$; $q = 1 \rightarrow m$) et associer au deuxième point d'impact (R), la charge calculée le long de la ligne de calcul de charge qui passe au plus près du point de référence ($R^*$).

**9.** Programme d'ordinateur selon la revendication 7, **caractérisé en ce qu'**il contient des instructions pour effectuer l'étape (5) à l'aide des étapes suivantes :

(8) les termes d'un premier et d'un deuxième vecteur de charge, donnés par les charges

$$( \sum_{k=1}^{n} c_{p,k}^{(a)} \quad , \quad \sum_{u=1}^{n} \rho_{q,u}^{(b)} )$$ le long des (m) premières et des (m) deuxièmes lignes de calcul de charge, sont pré- calculés pour les deux positions angulaires ($\theta_a, \theta_b$) de chacune des différentes paires de positions angulaires, et

(9) le coefficient d'atténuation (C) de n'importe quel point (P0) de l'ensemble considéré est calculé en appelant les termes des deux vecteurs de charge pré- calculés le long des deux lignes de calcul de charge qui passent au plus près des deux points d'impact ($T^{(a)}, R^{(b)}$) du point (P0), sous chacune des différentes paires de positions angulaires ($\theta_a, \theta_b$).

## Claims

**1.** X-ray imaging method, in which a body to be examined is received by a support and in which,

- a X-ray beam is emitted from a focal point of a source towards the body ,
- an intensity is attenuated due to the passage of the X-rays through the body and detected by a detector irradiated by the beam, for different pairs of angular positions taken by the body or the source - detector assembly around a rotation axis , said two angular positions of said different pairs having an angular difference ,
- the detected intensities are converted into data by a digital converter and,
- the data are processed by a programmed computer by using the following formula:

$$C = \frac{\rho^{(b)}}{n} + \frac{c^{(a)}}{n} - \frac{1}{2n^2} ( \sum_{k=1}^{n} c_k^{(a)} + \sum_{u=1}^{n} \rho_u^{(b)} )$$

to calculate a value C of the attenuation coefficient at a point PO of a set of points {P0}, for a given pair of said angular positions, in order to obtain an image representing an X-ray attenuation coefficient for said set of points {P0} of the body , where, in the formula :

- $c^{(a)}$ is the data coming from the intensity detected at an impact point $T^{(a)}$ of a first ray i passing through said point PO for said first angular position $\theta_a$,
- $\rho^{(b)}$ is the data coming from the intensity detected at an impact point $R^{(b)}$ of a second ray j passing through said point PO for said second angular position $\theta_b$, $- \sum_{k=1}^{n} c_k^{(a)}$ is the load associated with said first ray impact point $T^{(a)}$, defined by the sum of data $c_k^{(a)}$ coming from intensities detected in the first angular position $\theta_a$,

along n points $T_k^{(a)}$ of a first load calculation line passing closest to said first impact point $T^{(a)}$, and

$$- \sum_{u=1}^{n} \rho_u^{(b)}$$ is the load associated with said second ray impact point $R^{(b)}$, defined by the sum of data $\rho_u^{(b)}$

coming from the intensities detected in the second angular position $\theta_b$, along n points $R_u^{(b)}$ of a second load calculation line passing closest to said second impact point $R^{(b)}$, **characterised in that** the computer is programmed to perform the following steps:

(1) pre-calculate, for any generic point of a volume irradiated by the beam emitted by the source, the positions on the detector of a first impact point $T^{(a)}$ of a ray i and a second impact point $R^{(b)}$ of a ray j, the two rays i and j passing through the generic point and corresponding to one another by a rotation of either the generic point or the source - detector assembly around the rotation axis $\Omega$, whose angle equals the angular difference $\Delta$ between the two angular positions $\theta_a$ and $\theta_b$ of said different pairs of said angular positions of the body or the source - detector assembly around the rotation axis ,

(2) pre-calculate the positions on the detector of first and second load calculation lines, along detection points $T_{p,k}$; $k = 1 \rightarrow n$; $p = 1 \rightarrow m$ and $R_{q,u}$; $u = 1 \rightarrow n$; $q = 1 \rightarrow m$, said load calculation lines converging respectively in a first geometrical point and a second geometrical point whose positions are determined by the focal point - rotation axis distance and the detector - rotation axis distance, each load calculation line being inclined with respect to the rotation axis with a slope angle $\gamma_p$ or $\gamma_q$ which runs a series of discrete values determined by a spatial resolution of the detector parallel to the rotation axis,

(3) calculate the value of the attenuation coefficient at point PO in the volume irradiated by the beam by using the pre-calculated positions of the first and second impact points $T^{(a)}$ ; $R^{(b)}$ and the pre-calculated first p and second q load calculation lines $T_{p,k}^{(a)}$; $k = 1 \rightarrow n$ ; $R_{q,u}^{(b)}$; $u = 1 \rightarrow n$ that pass closest to the first and second impact points ($T^{(a)}$ ; $R^{(b)}$) respectively,

(4) repeat step (3) for said different pairs of angular positions $\theta_a$ and $\theta_b$ taken by the body or the source - detector assembly around the rotation axis and calculate a mean value <C> of the attenuation coefficient at point PO for said different pairs of angular positions, and

(5) repeat step (4) and display on the computer screen the image representing the mean values <C> of the set of points {PO}.

2. X-ray imaging method according to claim 1, **characterised in that** the computer 13 is programmed to perform step (3) with two additional steps:

(6) pre-calculate the position on the detector 9 of a first reference point $T^*$ in connection with the first impact point, at the intersection of the line passing through first geometric convergence point S1 (- (D + L) L, 0) and first impact point $T$ (X1 ,L ,Z1) with a line of detection points, parallel to the rotation axis and along which the discrete values of the slope angles $\gamma_p$ of the m first calculation load lines $T_{p,k}$; $k = 1 \rightarrow n$; $p = 1 \rightarrow m$ are incremented, and allocate the first impact point T with the load calculated along the load calculation line p that passes closest to the reference point $T^*$ and,

(7) pre-calculate the position on the detector 9 of a second reference point $R^*$ in connection with the second impact point, at the intersection of the line passing through the second geometrical convergence point S2 (D+L, L, 0) and the second impact point R (L, Y2, Z2) with a line of detection points, parallel to the rotation axis $\Omega$ and along which the discrete values of the slope angles $\gamma_q$ of the m second load calculation lines $R_{q,u}$; $u = 1 \rightarrow n$; $q = 1 \rightarrow m$ are incremented, and allocate the second impact point R with the load calculated along the load calculation line q that passes closest to the reference point $R^*$.

3. X-ray imaging method according to claim 1 or 2, **characterised in that** the computer is programmed to perform step (2) or steps (6) and (7) by using the detector edge which is opposite to the first or the second geometric convergence point associated with the first, respectively the second load calculation lines, as the line of detection points along which the discrete values of the slope angles of the first, respectively the second load calculation lines are incremented.

4. X-ray imaging method according to claim 1 or 2, **characterised in that** the computer (13) is programmed to perform step (5) with the following additional steps:

(8) pre-calculate a first and second load vectors whose terms are given by the loads

$\sum_{k=1}^{n} c_{p,k}^{(a)}$ and $\sum_{u=1}^{n} \rho_{q,u}^{(b)}$ along the m first, respectively the m second load

calculation lines, for the two angular positions $\theta_a$ and $\theta_b$ of each pair of different angular positions, and

(9) calculate the attenuation coefficient of any point PO by recalling the terms of the two load vectors pre-calculated along the two load calculation lines that pass closest the two impact points $T^{(a)}$ et $R^{(b)}$ associated with said point P0, for each pair of different angular positions.

5. X-ray imaging method according to one of the claims 1 to 4, **characterised in that** the angular difference recited in step (1) corresponds to two angular positions successively taken by the body or the source - detector assembly around the rotation axis.

6. X-ray imaging method according to one of the claims 1 to 4, **characterised in that** the angular difference recited in step (1) corresponds to two angular positions simultaneously taken by the body or the source - detector assembly around the rotation axis.

7. Computer programme comprising instructions enabling a method according to one the claims 1 to 6 to be carried out when the programme is loaded in a computer (13) to process data ($c^{(a)}$, $\rho^{(b)}$) using the following formula:

$$C = \frac{\rho^{(b)}}{n} + \frac{c^{(a)}}{n} - \frac{1}{2n^2} \left( \sum_{k=1}^{n} c_k^{(a)} + \sum_{u=1}^{n} \rho_u^{(b)} \right)$$

to obtain an image showing X-ray attenuation coefficients value (C) of a group of points {P0} of the body under examination, calculated for a couple of angular positions for each point (P0) of said group of points {P0}, where, in the formula :

- $c^{(a)}$ is the data coming from the intensity detected at impact point $T^{(a)}$ of a first X-ray i passing through said point (P0) for the first angular position ($\theta_a$),
- $\rho^{(b)}$ is the data coming from the intensity detected at impact point $R^{(b)}$ of a second X-ray j passing through said point (P0) for a second angular position ($\theta_b$),

- $\sum_{k=1}^{n} c_k^{(a)}$ is the load associated with said first impact point $T^{(a)}$, defined by the sum of data $c_k^{(a)}$ ‹coming

from intensities detected in the first angular position $\theta_a$, along n points $T_k^{(a)}$ of a first load calculation line passing closest to said first impact point $T^{(a)}$, and

- $\sum_{u=1}^{n} \rho_u^{(b)}$ is the load associated with said second ray impact point $R^{(b)}$, defined by the sum of data $\rho_u^{(b)}$

coming from the intensities detected in the second angular position $\theta_b$, along n points $R_u^{(b)}$ of a second load calculation line passing closest to said second impact point $R^{(b)}$,

**characterised in that** the computer (13) is programmed to carry out the following stages:

(1) pre-calculate, for any generic point (G) of a volume that represents a volume irradiated by the beam emitted by the source, two points that represent the positions on the detector of a first impact point $T^{(a)}$ of a ray i and a second impact point $R^{(b)}$ of a ray j on the detector, the two rays i and j passing through the generic point and corresponding to one another by a rotation of either the generic point or the source - detector assembly around the rotation axis $\Omega$, whose angle equals the angular difference $\Delta$ between the two angular positions $\theta_a$ and $\theta_b$ of said different pairs of said angular positions of the body or the source - detector assembly around the rotation axis $\Omega$,

(2) pre-calculate two sets of lines that represent the positions on the detector of first and second load calculation lines, along detection points $T_{p,k}; k = 1 \to n$; $p=1 \to m$ and $R_{q,u}$; $u=1 \to n$; $q=1 \to m$, said load calculation lines converging respectively in a first geometrical point and a second geometrical point whose positions are determined by the source focal point - rotation axis distance and the detector - rotation axis distance, each load calculation line being inclined with respect to the rotation axis with a slope angle $\gamma_p$ or $\gamma_q$ which runs a series of discrete values determined by a spatial resolution of the detector parallel to the rotation axis,

(3) calculate the value C of the attenuation coefficient at point PO in the volume irradiated by the beam by using the pre-calculated positions of the first and second impact points $T^{(a)}$ ; $R^{(b)}$ and the pre-calculated first p and second q load calculation lines $T_{p,k}^{(a)}; k = 1 \to n$ ; $R_{q,u}^{(b)}; u = 1 \to n$ that pass closest to the first and second impact points ($T^{(a)}$ $R^{(b)}$) respectively,

(4) repeat step (3) for data obtained for said different pairs of angular positions ($\theta_a, \theta_b$) taken by the body or the source - detector assembly around the rotation axis and calculate a mean value <C> of the attenuation coefficient at point PO for said different pairs of angular positions, and

(5) repeat step (4) and display on the computer screen the image representing the mean values <C> of the set of points {PO}.

8. Computer programme according to claim 7, **characterised in that** it comprises further instructions to carry out stage (3) by means of the following stages:

(6) pre-calculate a point that represents the position on the detector 9 of a first reference point $T^*$ in connection with the first impact point, at the intersection of the line passing through first geometric convergence point S1 (- (D + L) L, 0) and first impact point $T$ (X1 ,L ,Z1) with a line of detection points, parallel to the rotation axis $\Omega$ and along which the discrete values of the slope angles $\gamma_p$ of the m first calculation load lines $T_{p,k}$; $k =1 \to n$; $p =1 \to m$ are incremented, and allocate the first impact point T with the load calculated along the load calculation line p that passes closest to the reference point $T^*$ and,

(7) pre-calculate a point that represents the position on the detector 9 of a second reference point $R^*$ in connection with the second impact point, at the intersection of the line passing through the second geometrical convergence point S2 (D+L, L, 0) and the second impact point R (L, Y2, Z2) with a line of detection points, parallel to the rotation axis $\Omega$ and along which the discrete values of the slope angles $\gamma_q$ of the m second load calculation lines $R_{q,u}$; $u=1 \to n$; $q=1 \to m$ are incremented, and allocate the second impact point R with the load calculated along the load calculation line q that passes closest to the reference point $R^*$.

9. Computer-readable medium according to claim 7, **characterised in that** it comprises further instructions to carry out stage (3) by means of the following stages:

(8) pre-calculate two vectors that represent a first and second load vectors whose terms are given by the load

$$\sum_{k=1}^{n} c_{p,k}^{(a)} \quad \text{and} \quad \sum_{u=1}^{n} \rho_{q,u}^{(b)}$$ along the m first, respectively the m second load calculation lines, for the two

angular positions $\theta_a$ and $\theta_b$ of each pair of different angular positions, and

(9) calculate the value C that represents the attenuation coefficient of any point PO by recalling the terms of the two load vectors pre-calculated along the two load calculation lines that pass closest the two impact points $T^{(a)}$ et $R^{(b)}$ associated with said point P0, for each pair of different angular positions.

**Patentansprüche**

1. Röntgen bildgebendes Verfahren, für Scannen, wobei ein Körper (3), der zu untersuchen ist, auf einer Unterstützung (1) steht und wobei

- Röntgenstrahlen (7) (i,j) von dem Fokus (F1,F2) einer Quelle (5) in Richtung des Körpers (3) ausgestrahlt werden,
- eine beim Durchgang der Röntgenstrahlen durch den Körper (3) geschwächte Intensität, mittels eines von den Röntgenstrahlen bestrahlten Detektors (9), für unterschiedliche Paare Winkelpositionen ($\theta_a$,$\theta_b$) des Körpers (3) oder der Einheit Quelle (5) - Detektor (9) bezüglich einer Drehachse ($\Omega$) detektiert wird, wobei die zwei Winkelpositionen ($\theta_a$,$\theta_b$) der unterschiedlichen Paaren einen Winkelunterschied ($\Delta$) machen,
- die detektierten Intensitäten mittels eines Analog-Digital-Konverters (11) in Daten ($_c{}^{(a)}$, $\rho^{(b)}$) konvertiert werden,
- die Daten ($c^{(a)}$, $\rho^{(b)}$) mittels eines programmierten Computers (13) verarbeitet werden, um zu einem Bild zu führen, das einen Schwächungskoeffizient der Röntgenstrahlen für eine Menge von Punkten {P0} des Körpers darstellt, das heißt, ein Wert (C) des Schwächungskoeffizienten für einen Punkt (P0) der Menge {P0} durch die Verwendung der folgenden Formel berechnet wird

$$C = \frac{\rho^{(b)}}{n} + \frac{c^{(a)}}{n} - \frac{1}{2n^2}\left(\sum_{k=1}^{n} c_k^{(a)} + \sum_{u=1}^{n} \rho_u^{(b)}\right)$$

wo, in dieser Formel,

$c^{(a)}$ bezeichnet die nach der Intensität kommende Data, die an einem Impactpunkt $T^{(a)}$ eines ersten Strahles i detektiert wird, der durch den berücksichtigten Punkt (P0) in der ersten Winkelposition ($\theta_a$) geht,
$\rho^{(b)}$ bezeichnet die nach der Intensität kommende Data, die an einem Impactpunkt $R^{(b)}$ eines zweiten Strahles j detektiert wird, der durch den berücksichtigten Punkt (P0) in der zweiten Winkelposition ($\theta_b$) geht,

$\sum_{k=1}^{n} c_k^{(a)}$ bezeichnet das mit dem ersten Impactpunkt ($T^{(a)}$) gebundene Gewicht, das der Summe der

($c_k{}^{(a)}$) Daten gleich ist, die nach den in der ersten Winkelposition ($\theta_a$) detektierten Intensitäten kommen,

entlang (n) Punkte $\left(T_k^{(a)}\right)$ einer ersten Gewichtsberechnungslinie, die am nächsten an den ersten Impactpunkt ($T^{(a)}$) geht, und

$\sum_{u=1}^{n} \rho_u^{(b)}$ bezeichnet das mit dem zweiten Impactpunkt ($R^{(b)}$) gebundene u=1

Gewicht, das der Summe der $\left(\rho_u^{(b)}\right)$ Daten gleich ist, die nach den in der zweiten Winkelposition ($\theta_b$)

detektierten Intensitäten kommen, entlang (n) Punkte $\left(R_u^{(b)}\right)$ einer zweiten Gewichtsberechnungslinie, die am nächsten an den zweiten Impactpunkt ($R^{(b)}$) geht,
**dadurch gekennzeichnet dass**, der Computer (13) programmiert wird, um die folgenden Schritten durchzuführen:

(1) Für jeden Punkt (G) eines Volumen, das von dem Strahl der Quelle (5) ausgestrahlt wird, werden die Position am Detektor (9) eines ersten Impactpunkt ($T$) eines Strahles (i) und die Position eines zweiten Impactpunkt ($R$) eines Strahles (j) vorausberechnet, wobei die beide Strahlen (i) und (j) durch den Punkt (G) gehen und sich mittels einer Drehung des Punktes (G) oder der Einheit Quelle (5) - Detektor (9) bezüglich der Drehachse ($\Omega$) entsprechen, dessen Drehungswinkel dem Winkelunterschied ($\Delta$) zwischen den beiden Winkelpositionen ($\theta_a$,$\theta_b$) der verschiedenen Paaren der Winkelpositionen des Körpers (3) oder der Einheit Quelle (5) - Detektor (9) bezüglich der Drehachse ($\Omega$) gleich ist,
(2) Die Position am Detektor (9) erster (m) und zweiter (m) Gewichtsberechnungslinien, die durch (n) Detektierungspunkte ($T_{p,k}=;k=1\rightarrow n;p=1\rightarrow m$ ; $R_{q,u}$; $u=1\rightarrow n;q=1\rightarrow m$) gehen, wird vorausberechnet, wobei die oben genannten Gewichtsberechnungslinien sich an einem ersten geometrischen Punk (S1) und einem zweiten geometrischen Punkt (S2) schneiden, derer Positionen von dem Abstand (D) zwischen dem Fokus (F1,F2) und der Drehachse ($\Omega$) und dem Abstand (L) zwischen dem Detektor (9) und der Drehachse ($\Omega$) bestimmt werden, und wobei jede oben genannte Gewichtsberechnungslinie (p,q) bezüglich der Drehachse ($\Omega$) einen Gefällewinkel macht ($\gamma_p,\gamma_q$), der schrittweise diskrete Werte einer Serie annimmt, die von einer räumlichen Auflösung ($R_h$) des Detektors (9) parallel zu der Drehachse ($\Omega$) bestimmt wird,

(3) Unter Berücksichtigung von der Position des Punktes (P0) in dem von den Strahlen ausgestrahlten Volumen, wird der Wert (C) des Schwächungskoeffizienten, nach den vorausberechneten Positionen der ersten und zweiten Impactpunkten ($T^{(a)}$ ; $R^{(b)}$) und den vorausberechneten ersten (p) und zweiten

(q) Gewichtsberechnungsliinien ( $T_{p,k}^{(a)}; k = 1 \rightarrow n$ ; $R_{q,u}^{(b)}; u = 1 \rightarrow n$ ), die am nächsten an die ersten und zweiten Impactpunkten ($T^{(a)}$; $R^{(b)}$) gehen,

berechnet,

(4) Schritt (3) wird für die verschiedenen Winkelpositionen ($\theta_a,\theta_b$) des Körpers (3) oder der Einheit Quelle (5) - Detektor (9) bezüglich der Drehachse ($\Omega$) wiederholt und ein Mittelwert <C> des Schwächungskoeffizienten des berücksichtigten Punktes (P0) wird für die verschiedenen Paare Winkelpositionen berechnet, und

(5) Schritt (4) wird wiederholt und das Bild, das die Mittelwert <C> der Menge {P0} von Punkten (P0) darstellt, wird auf dem Schirm des Computers angezeigt.

2.  Röntgen bildgebendes Verfahren nach Anspruch 1, **dadurch gekennzeichnet dass** der Computer (13) programmiert wird, um Schritt (3) mittels der folgenden Schritte durchzuführen:

    (6) Die Position am Detektor (9) eines Referenzpunktes ($T^*$) des ersten Impactpunktes ($T$) wird vorausberechnet, der den Schnittpunkt zwischen der Geraden, die durch den ersten geometrischen Punkt (S1) und den ersten Impactpunkt ($T$) geht, und einer Linie Detektierungspunkte bildet, die parallel zu der Drehachse ($\Omega$) verläuft und zur schrittweise Bestimmung der diskreten Werten der Gefällewinkeln ($\gamma_p$) der (m) ersten Gewichtsberechnungslinien ($T_{p,k}$; $k =1\rightarrow n;p=1\rightarrow m$) dient, und das Gewicht, das für die Gewichtsberechnungslinie berechnet wird, die am nächsten an den Referenzpunkt ($T^*$) geht, wird mit dem ersten Impactpunkt ($T$) verlinkt, und

    (7) Die Position am Detektor (9) eines Referenzpunktes ($R^*$) des zweiten Impactpunktes ($R$) wird vorausberechnet, der den Schnittpunkt zwischen der Geraden, die durch den zweiten geometrischen Punkt (S2) und den zweiten Impactpunkt ($R$) geht, und einer Linie Detektierungspunkte bildet, die parallel zu der Drehachse ($\Omega$) verläuft und zur Bestimmung der diskreten Werten der Gefällewinkeln ($\gamma_q$) der (m) zweiten Gewichtsberechnungslinien ($R_{q,u};u=1\rightarrow n;q=1\rightarrow m$) dient, und das Gewicht, das für die Gewichtsberechnungslinie berechnet wird, die am nächsten an den Referenzpunkt ($R^*$) geht, wird mit dem zweiten Impactpunkt ($R$) verlinkt.

3.  Röntgen bildgebendes Verfahren nach Anspruch 1 oder 2, **dadurch gekennzeichnet dass**, der Computer programmiert wird um Schritt (2) oder Schritte (6) und (7) so durchzuführen dass, die Linie der Detektierungspunkte, die parallel zur der Drehachse ($\Omega$) verläuft und einen Rand des Detektors (9) bildet, der sich gegensätzlich zu dem geometrischen Punkt (S1,S2) befindet, zur Bestimmung der diskreten Werten der Gefällewinkeln ($\gamma_p,\gamma_q$) der (m) ersten und (m) zweiten Gewichtsberechnungslinien dient.

4.  Röntgen bildgebendes Verfahren nach Anspruch 1 oder 2, **dadurch gekennzeichnet dass**, der Computer programmiert wird, um Schritt (5) mittels der folgenden Schritte durchzuführen:

    (8) Die Werte eines ersten und eines zweiten Gewichtsvektors, die den Gewichte ( $\sum_{k=1}^{n} c_{p,k}^{(a)}$ , $\sum_{u=1}^{n} \rho_{q,u}^{(b)}$ ) gleich sind, die entlang den (m) ersten und den (m) zweiten Gewichtsberechnungslinien berechnet werden, werden für die zwei Winkelpositionen ($\theta_a,\theta_b$) jeden von den verschiedenen Paaren Winkelpositionen vorausberechnet, und

    (9) Der Schwächungskoeffizient (C) jeden Punktes (P0) der Menge wird so berechnet dass, die Werte zweiter Gewichtsvektoren angerufen werden, die entlang zwei Gewichtsberechnungslinien vorausberechnet werden, die für jedes von den verschiedenen Paaren Winkelpositionen ($\theta_a,\theta_b$) am nächsten an die zwei Impactpunkte ($T^{(a)}$, $R^{(b)}$) des Punktes (P0) gehen.

**5.** Röntgen bildgebendes Verfahren nach einem von Ansprüchen 1 bis 4, **dadurch gekennzeichnet dass**, die am Schritt (1) definierte Drehung ($\Delta$) zwei nachfolgenden Winkelpositionen ($\theta_a$, $\theta_b$) des Körpers (3) oder der Einheit Quelle (5) - Detektor (9) bezüglich der Drehachse ($\Omega$) entspricht.

**6.** Röntgen bildgebendes Verfahren nach einem von Ansprüchen 1 bis 4, **dadurch gekennzeichnet dass**, die am Schritt (1) definierte Drehung ($\Delta$) zwei gleichzeitigen Winkelpositionen ($\theta_a$, $\theta_b$) des Körpers (3) oder der Einheit Quelle (5) - Detektor (9) bezüglich der Drehachse ($\Omega$) entspricht.

**7.** Computerprogramm, das Befehle umfasst, die einem Computer erlauben, ein Verfahren nach einem von Ansprüchen 1 bis 6 durchzuführen wenn es im Computer (13) eingeladen wird, um die Daten ($c^{(a)}$, $p^{(b)}$) durch die Verwendung der folgenden Formel zu verarbeiten:

$$C = \frac{\rho^{(b)}}{n} + \frac{c^{(a)}}{n} - \frac{1}{2n^2} \left( \sum_{k=1}^{n} c_k^{(a)} + \sum_{u=1}^{n} \rho_u^{(b)} \right)$$

damit ein Wert (C) des Schwächungskoeffizienten der Röntgenstrahlen für jeden Punkt (P0) der Menge {P0} und jedes Paar Winkelpositionen ($\theta_a$,$\theta_b$) zu berechnen und zu einem Bild zu führen, das den Schwächungskoeffizient für die Menge von Punkten {P0} des Körpers darstellt, wo, in dieser Formel :

$c^{(a)}$ bezeichnet die nach der Intensität kommende Data, die an einem Impactpunkt $T^{(a)}$ eines ersten Strahles i detektiert wird, der durch den berücksichtigten Punkt (P0) in der ersten Winkelposition ($\theta_a$) geht, $\rho^{(b)}$ bezeichnet die nach der Intensität kommende Data, die an einem Impactpunkt $R^{(b)}$ eines zweiten Strahles j detektiert wird, der durch den berücksichtigten Punkt (P0) in der zweite Winkelposition ($\theta_b$) geht,

$\sum_{k=1}^{n} c_k^{(a)}$ bezeichnet das mit dem ersten Impactpunkt ($T^{(a)}$) gebundene Gewicht, das der Summe der

($c_k^{(a)}$) Daten gleich ist, die nach den in der ersten Winkelposition ($\theta_a$) detektierten Intensitäten kommen,

entlang (n) Punkte ($T_k^{(a)}$) einer ersten Gewichtsberechnungslinie, die am nächsten an den ersten Impactpunkt ($T^{(a)}$) geht, und

$\sum_{u=1}^{n} \rho_u^{(b)}$ bezeichnet das mit dem zweiten Impactpunkt ($R^{(b)}$) gebundene u=1

Gewicht, das der Summe der ($\rho_u^{(b)}$) Daten gleich ist, die nach den in der zweiten Winkelposition ($\theta_b$) detektierten Intensitäten kommen, entlang (n) Punkte ($R_u^{(b)}$) einer zweiten Gewichtsberechnungslinie, die am nächsten an den zweiten Impactpunkt ($R^{(b)}$) geht, **dadurch gekennzeichnet dass**, der Computer (13) programmiert wird, um die folgenden Schritten durchzuführen:

(1) Für jeden Punkt (G) eines Volumen, das von dem Strahl der Quelle (5) ausgestrahlt wird, werden die Position am Detektor (9) eines ersten Impactpunkt ($T$) eines Strahles (i) und die Position eines zweiten Impactpunkt ($R$) eines Strahles (j) vorausberechnet, wobei die beide Strahlen (i) und (j) durch den Punkt (G) gehen und sich mittels einer Drehung des Punktes (G) oder der Einheit Quelle (5) - Detektor (9) bezüglich der Drehachse ($\Omega$) entsprechen, dessen Drehungswinkel dem Winkelunterschied ($\Delta$) zwischen den beiden Winkelpositionen ($\theta_a$,$\theta_b$) der verschiedenen Paaren der Winkelpositionen des Körpers (3) oder der Einheit Quelle (5) - Detektor (9) bezüglich der Drehachse ($\Omega$) gleich ist, (2) Die Position am Detektor (9) erster (m) und zweiter (m) Gewichtsberechnungslinien, die durch (n) Detektierungspunkte ($T_{p,k}$; $k=1{\to}n$; $p=1{\to}m$ ; $R_{q,u}$; $u=1{\to}n$; $q=1{\to}m$) gehen, wird vorausberechnet, wobei die oben genannten Gewichtsberechnungslinien sich an einem ersten geometrischen Punk (S1) und einem zweiten geometrischen Punkt (S2) schneiden, derer Positionen von dem Abstand (D) zwischen dem Fokus (F1,F2) und der Drehachse ($\Omega$) und dem Abstand (L) zwischen dem Detektor (9) und der Drehachse ($\Omega$) bestimmt werden, und wobei jede oben genannte Gewichtsberechnungslinie (p,q) bezüglich der Drehachse ($\Omega$) einen Gefällewinkel macht ($\gamma_p$,$\gamma_q$), der schrittweise diskrete Werte einer Serie annimmt, die von einer räumlichen Auflösung ($R_h$) des Detektors (9) parallel zu der Drehachse ($\Omega$) bestimmt wird.

(3) Unter Berücksichtigung von der Position des Punktes (P0) in dem von den Strahlen ausgestrahlten Volumen, wird der Wert (C) des Schwächungskoeffizienten, nach den vorausberechneten Positionen der ersten und zweiten Impactpunkten ($T^{(a)}$ ; $R^{(b)}$) und den vorausberechneten ersten (p) und zweiten (q) Gewichtsberechnungslinien $(T_{p,k}^{(a)}; k = 1 \to n$ ; $R_{q,u}^{(b)}; u = 1 \to n)$, die am nächsten an die ersten und zweiten Impactpunkten ($T^{(a)}$ ; $R^{(b)}$) gehen,
berechnet,

(4) Schritt (3) wird für die verschiedenen Winkelpositionen ($\theta_a$,$\theta_b$) des Körpers (3) oder der Einheit Quelle (5) - Detektor (9) bezüglich der Drehachse ($\Omega$) wiederholt und ein Mittelwert <C> des Schwächungskoeffizienten des berücksichtigten Punktes (P0) wird für die verschiedenen Paare Winkelpositionen berechnet, und

(5) Schritt (4) wird wiederholt und das Bild, das die Mittelwert <C> der Menge {P0} von Punkten (P0) darstellt, wird auf dem Schirm des Computers angezeigt.

8. Computerprogramm nach Anspruch 7, **dadurch gekennzeichnet dass**, es Befehle umfasst, um Schritt (3) mittels der folgenden Schritten durchzuführen:

(6) Die Position am Detektor (9) eines Referenzpunktes ($T^*$) des ersten Impactpunktes ($T$) wird vorausberechnet, der den Schnittpunkt zwischen der Geraden, die durch den ersten geometrischen Punkt (S1) und den ersten Impactpunkt ($T$) geht, und einer Linie Detektierungspunkte bildet, die parallel zu der Drehachse ($\Omega$) verläuft und zur Bestimmung der diskreten Werten der Gefällewinkeln ($\gamma_p$) der (m) ersten Gewichtsberechnungslinien ($T_{p,k}$; ${\to}k=1{\to}n$; $p=1{\to}m$) dient, und das Gewicht, das für die Gewichtsberechnungslinie berechnet wird, die am nächsten an den Referenzpunkt ($T^*$) geht, wird mit dem ersten Impactpunkt ($T$) verlinkt, und

(7) Die Position am Detektor (9) eines Referenzpunktes ($R^*$) des zweiten Impactpunktes ($R$) wird vorausberechnet, der den Schnittpunkt zwischen der Geraden, die durch den zweiten geometrischen Punkt (S2) und den zweiten Impactpunkt ($R$) geht, und einer Linie Detektierungspunkt bildet, die parallel zu der Drehachse ($\Omega$) verläuft und zur Bestimmung der diskreten Werten der Gefällewinkeln ($\gamma_q$) der (m) zweiten Gewichtsberechnungslinien ($R_{q,u}$; $u=1{\to}n$; $q=1{\to}m$) dient, und das Gewicht, das für die Gewichtsberechnungslinie berechnet wird, die am nächsten an den Referenzpunkt ($R^*$) geht, wird mit dem zweiten Impactpunkt ($R$) verlinkt.

9. Computerprogramm nach Anspruch 7, **dadurch gekennzeichnet dass**, es Befehle umfasst, um Schritt (5) mittels der folgenden Schritten durchzuführen:

(8) Die Werte eines ersten und eines zweiten Gewichtsvektors, die den Gewichte $\left( \sum_{k=1}^{n} c_{p,k}^{(a)} \ , \ \sum_{u=1}^{n} \rho_{q,u}^{(b)} \right)$ gleich sind, die entlang den (m) ersten und den (m) zweiten Gewichtsberechnungslinien berechnet werden, werden für die zwei Winkelpositionen ($\theta_a$,$\theta_b$) jeden von den verschiedenen Paaren Winkelpositionen vorausberechnet, und

(9) Der Schwächungskoeffizient (C) jeden Punktes (P0) der Menge wird so berechnet dass, die Werte zweiter Gewichtsvektoren angerufen werden, die entlang zwei Gewichtsberechnungslinien vorausberechnet werden, die für jedes von den verschiedenen Paaren Winkelpositionen ($\theta_a$,$\theta_b$) am nächsten an die zwei Impactpunkte ($T^{(a)}$ , $R^{(b)}$) des Punktes (P0) gehen.

$$\frac{X_1}{X} = \frac{L+D}{Y+D} \qquad\qquad \frac{Y_2}{Y} = \frac{L+D}{X+D}$$

Fig. 1

$$\frac{Z_1}{Z} = \frac{L+D}{Y+D}$$

$T\ (X1,L,Z1) \rightarrow c$

$G(X,Y,Z)$

i

$Z1$

$Z$

$g(X,Y)$

$t\ (X1,L)$

5

$F1\ (0,-D,0)$

Fig. 2

$$\frac{Z2}{Z} = \frac{L+D}{X+D}$$

Fig. 3

| θ (°) | X (mm) | Y (mm) | Z (mm) | K1 | X1 (mm) | Z1 (mm) | K2 | Y2 (mm) | Z2 (mm) |
|---|---|---|---|---|---|---|---|---|---|
| 47,73 | 10,00 | 11,00 | 20,00 | 1,16 | 11,58 | 23,16 | 1,16 | 12,75 | 23,18 |
| 57,73 | 7,94 | 12,57 | 20,00 | 1,16 | 9,18 | 23,14 | 1,16 | 14,59 | 23,21 |
| 67,73 | 5,63 | 13,76 | 20,00 | 1,16 | 6,51 | 23,12 | 1,16 | 15,99 | 23,25 |
| 77,73 | 3,16 | 14,53 | 20,00 | 1,16 | 3,65 | 23,11 | 1,16 | 16,91 | 23,28 |
| 87,73 | 0,59 | 14,85 | 20,00 | 1,16 | 0,68 | 23,10 | 1,17 | 17,32 | 23,32 |
| 97,73 | -2,00 | 14,73 | 20,00 | 1,16 | -2,31 | 23,11 | 1,17 | 17,21 | 23,36 |
| 107,73 | -4,53 | 14,16 | 20,00 | 1,16 | -5,23 | 23,12 | 1,17 | 16,57 | 23,40 |
| 117,73 | -6,92 | 13,16 | 20,00 | 1,16 | -8,00 | 23,13 | 1,17 | 15,42 | 23,44 |
| 127,73 | -9,10 | 11,76 | 20,00 | 1,16 | -10,53 | 23,15 | 1,17 | 13,80 | 23,48 |
| 137,73 | -11,00 | 10,00 | 20,00 | 1,16 | -12,75 | 23,18 | 1,18 | 11,75 | 23,51 |
| 147,73 | -12,57 | 7,94 | 20,00 | 1,16 | -14,59 | 23,21 | 1,18 | 9,34 | 23,53 |
| 157,73 | -13,76 | 5,63 | 20,00 | 1,16 | -15,99 | 23,25 | 1,18 | 6,63 | 23,55 |
| 167,73 | -14,53 | 3,16 | 20,00 | 1,16 | -16,91 | 23,28 | 1,18 | 3,72 | 23,56 |
| 177,73 | -14,85 | 0,59 | 20,00 | 1,17 | -17,32 | 23,32 | 1,18 | 0,69 | 23,57 |
| 187,73 | -14,73 | -2,00 | 20,00 | 1,17 | -17,21 | 23,36 | 1,18 | -2,35 | 23,56 |
| 197,73 | -14,16 | -4,53 | 20,00 | 1,17 | -16,57 | 23,40 | 1,18 | -5,33 | 23,56 |
| 207,73 | -13,16 | -6,92 | 20,00 | 1,17 | -15,42 | 23,44 | 1,18 | -8,14 | 23,54 |
| 217,73 | -11,76 | -9,10 | 20,00 | 1,17 | -13,80 | 23,48 | 1,18 | -10,70 | 23,52 |
| 227,73 | -10,00 | -11,00 | 20,00 | 1,18 | -11,75 | 23,51 | 1,17 | -12,92 | 23,49 |
| 237,73 | -7,94 | -12,57 | 20,00 | 1,18 | -9,34 | 23,53 | 1,17 | -14,74 | 23,46 |
| 247,73 | -5,63 | -13,76 | 20,00 | 1,18 | -6,63 | 23,55 | 1,17 | -16,11 | 23,42 |
| 257,73 | -3,16 | -14,53 | 20,00 | 1,18 | -3,72 | 23,56 | 1,17 | -16,98 | 23,38 |
| 267,73 | -0,59 | -14,85 | 20,00 | 1,18 | -0,69 | 23,57 | 1,17 | -17,34 | 23,34 |
| 277,73 | 2,00 | -14,73 | 20,00 | 1,18 | 2,35 | 23,56 | 1,17 | -17,16 | 23,30 |
| 287,73 | 4,53 | -14,16 | 20,00 | 1,18 | 5,33 | 23,56 | 1,16 | -16,47 | 23,26 |
| 297,73 | 6,92 | -13,16 | 20,00 | 1,18 | 8,14 | 23,54 | 1,16 | -15,28 | 23,23 |
| 307,73 | 9,10 | -11,76 | 20,00 | 1,18 | 10,70 | 23,52 | 1,16 | -13,64 | 23,19 |
| 317,73 | 11,00 | -10,00 | 20,00 | 1,17 | 12,92 | 23,49 | 1,16 | -11,58 | 23,16 |
| 327,73 | 12,57 | -7,94 | 20,00 | 1,17 | 14,74 | 23,46 | 1,16 | -9,18 | 23,14 |
| 337,73 | 13,76 | -5,63 | 20,00 | 1,17 | 16,11 | 23,42 | 1,16 | -6,51 | 23,12 |
| 347,73 | 14,53 | -3,16 | 20,00 | 1,17 | 16,98 | 23,38 | 1,16 | -3,65 | 23,11 |
| 357,73 | 14,85 | -0,59 | 20,00 | 1,17 | 17,34 | 23,34 | 1,16 | -0,68 | 23,10 |
| 367,73 | 14,73 | 2,00 | 20,00 | 1,17 | 17,16 | 23,30 | 1,16 | 2,31 | 23,11 |
| 377,73 | 14,16 | 4,53 | 20,00 | 1,16 | 16,47 | 23,26 | 1,16 | 5,23 | 23,12 |
| 387,73 | 13,16 | 6,92 | 20,00 | 1,16 | 15,28 | 23,23 | 1,16 | 8,00 | 23,13 |
| 397,73 | 11,76 | 9,10 | 20,00 | 1,16 | 13,64 | 23,19 | 1,16 | 10,53 | 23,15 |
| 407,73 | 10,00 | 11,00 | 20,00 | 1,16 | 11,58 | 23,16 | 1,16 | 12,75 | 23,18 |

Fig. 4

Fig. 5

$$\frac{Z_1^*}{Z} = \frac{\ell + L + D}{X + Y + D}$$

$$\frac{Z_2^*}{Z} = \frac{\ell + L + D}{X + Y + D}$$

Fig. 6

| $\gamma_p ; \gamma_q$ | $\ell_p ; \ell_q$ (mm) | $N_p ; N_q$ | E | p x Rh (mm) | p ; q |
|---|---|---|---|---|---|
| 1 | 4,64 | 57,29 | 107,75 | 34,91 | 431 |
| 2 | 2,32 | 28,64 | 215,56 | 69,84 | 862 |
| 3 | 1,55 | 19,08 | 323,50 | 104,82 | 1294 |
| 4 | 1,16 | 14,30 | 431,65 | 139,85 | 1727 |
| 5 | 0,93 | 11,43 | 540,05 | 174,98 | 2160 |
| 6 | 0,77 | 9,51 | 648,79 | 210,21 | 2595 |

## Fig. 7

| θ (°) | X (mm) | Y (mm) | Z (mm) | X1 (mm) | Z1 (mm) | Y2 (mm) | Z2 (mm) | Z*1 = Z*2 (mm) | p ou q |
|---|---|---|---|---|---|---|---|---|---|
| 47,73 | 10,00 | 11,00 | 20,00 | 11,58 | 23,16 | 12,75 | 23,18 | 26,30 | 325 |
| 57,73 | 7,94 | 12,57 | 20,00 | 9,18 | 23,14 | 14,59 | 23,21 | 26,31 | 325 |
| 67,73 | 5,63 | 13,76 | 20,00 | 6,51 | 23,12 | 15,99 | 23,25 | 26,33 | 325 |
| 77,73 | 3,16 | 14,53 | 20,00 | 3,65 | 23,11 | 16,91 | 23,28 | 26,36 | 325 |
| 87,73 | 0,59 | 14,85 | 20,00 | 0,68 | 23,10 | 17,32 | 23,32 | 26,39 | 326 |
| 97,73 | -2,00 | 14,73 | 20,00 | -2,31 | 23,11 | 17,21 | 23,36 | 26,44 | 326 |
| 107,73 | -4,53 | 14,16 | 20,00 | -5,23 | 23,12 | 16,57 | 23,40 | 26,50 | 327 |
| 117,73 | -6,92 | 13,16 | 20,00 | -8,00 | 23,13 | 15,42 | 23,44 | 26,56 | 328 |
| 127,73 | -9,10 | 11,76 | 20,00 | -10,53 | 23,15 | 13,80 | 23,48 | 26,62 | 329 |
| 137,73 | -11,00 | 10,00 | 20,00 | -12,75 | 23,18 | 11,75 | 23,51 | 26,68 | 329 |
| 147,73 | -12,57 | 7,94 | 20,00 | -14,59 | 23,21 | 9,34 | 23,53 | 26,75 | 330 |
| 157,73 | -13,76 | 5,63 | 20,00 | -15,99 | 23,25 | 6,63 | 23,55 | 26,81 | 331 |
| 167,73 | -14,53 | 3,16 | 20,00 | -16,91 | 23,28 | 3,72 | 23,56 | 26,87 | 332 |
| 177,73 | -14,85 | 0,59 | 20,00 | -17,32 | 23,32 | 0,69 | 23,57 | 26,92 | 332 |
| 187,73 | -14,73 | -2,00 | 20,00 | -17,21 | 23,36 | -2,35 | 23,56 | 26,97 | 333 |
| 197,73 | -14,16 | -4,53 | 20,00 | -16,57 | 23,40 | -5,33 | 23,56 | 27,00 | 333 |
| 207,73 | -13,16 | -6,92 | 20,00 | -15,42 | 23,44 | -8,14 | 23,54 | 27,03 | 334 |
| 217,73 | -11,76 | -9,10 | 20,00 | -13,80 | 23,48 | -10,70 | 23,52 | 27,04 | 334 |
| 227,73 | -10,00 | -11,00 | 20,00 | -11,75 | 23,51 | -12,92 | 23,49 | 27,05 | 334 |
| 237,73 | -7,94 | -12,57 | 20,00 | -9,34 | 23,53 | -14,74 | 23,46 | 27,04 | 334 |
| 247,73 | -5,63 | -13,76 | 20,00 | -6,63 | 23,55 | -16,11 | 23,42 | 27,02 | 334 |
| 257,73 | -3,16 | -14,53 | 20,00 | -3,72 | 23,56 | -16,98 | 23,38 | 26,98 | 333 |
| 267,73 | -0,59 | -14,85 | 20,00 | -0,69 | 23,57 | -17,34 | 23,34 | 26,94 | 333 |
| 277,73 | 2,00 | -14,73 | 20,00 | 2,35 | 23,56 | -17,16 | 23,30 | 26,89 | 332 |
| 287,73 | 4,53 | -14,16 | 20,00 | 5,33 | 23,56 | -16,47 | 23,26 | 26,84 | 331 |
| 297,73 | 6,92 | -13,16 | 20,00 | 8,14 | 23,54 | -15,28 | 23,23 | 26,78 | 331 |
| 307,73 | 9,10 | -11,76 | 20,00 | 10,70 | 23,52 | -13,64 | 23,19 | 26,71 | 330 |
| 317,73 | 11,00 | -10,00 | 20,00 | 12,92 | 23,49 | -11,58 | 23,16 | 26,65 | 329 |
| 327,73 | 12,57 | -7,94 | 20,00 | 14,74 | 23,46 | -9,18 | 23,14 | 26,58 | 328 |
| 337,73 | 13,76 | -5,63 | 20,00 | 16,11 | 23,42 | -6,51 | 23,12 | 26,52 | 327 |
| 347,73 | 14,53 | -3,16 | 20,00 | 16,98 | 23,38 | -3,65 | 23,11 | 26,47 | 327 |
| 357,73 | 14,85 | -0,59 | 20,00 | 17,34 | 23,34 | -0,68 | 23,10 | 26,42 | 326 |
| 367,73 | 14,73 | 2,00 | 20,00 | 17,16 | 23,30 | 2,31 | 23,11 | 26,37 | 326 |
| 377,73 | 14,16 | 4,53 | 20,00 | 16,47 | 23,26 | 5,23 | 23,12 | 26,34 | 325 |
| 387,73 | 13,16 | 6,92 | 20,00 | 15,28 | 23,23 | 8,00 | 23,13 | 26,31 | 325 |
| 397,73 | 11,76 | 9,10 | 20,00 | 13,64 | 23,19 | 10,53 | 23,15 | 26,30 | 325 |
| 407,73 | 10,00 | 11,00 | 20,00 | 11,58 | 23,16 | 12,75 | 23,18 | 26,30 | 325 |

Fig. 8

$$\frac{X_1}{X_i} = \frac{L+D}{Y_i+D}$$

Fig. 9

$$\frac{X_2}{X_j} = \frac{L+D}{Y_j+D}$$

Fig. 10

$$\frac{\overset{*}{Z_1}}{Z} = \frac{\ell + L + D}{X_i + Y_i + D} \qquad\qquad \frac{\overset{*}{Z_2}}{Z} = \frac{\ell + L + D}{-X_j + Y_j + D}$$

$$\sum_{k=1}^{n} c_{p,k}^{(\Delta)} \leftarrow T_{p,k}^{(\Delta)}(k:1, 2, ...n) \qquad z \qquad R_{q,u}^{(\Delta)}(u:1, 2, ...n) \rightarrow \sum_{u=1}^{n} \rho_{q,u}^{(\Delta)}$$

$$\frac{Z_1}{Z} = \frac{L + D}{Y_i + D} \qquad\qquad \frac{Z_2}{Z} = \frac{L + D}{Y_j + D}$$

$$R^*(-\ell, L, \overset{*}{Z_2}) \qquad\qquad T^*(\ell, L, \overset{*}{Z_1})$$

$$\gamma_p \qquad\qquad \gamma_q$$

S1 (-(D+L),L,0)

$$c^{(\Delta)} \leftarrow T^{(\Delta)}(X1, L, Z1) \qquad\qquad R^{(\Delta)}(X2, L, \overset{.}{Z2}) \rightarrow \rho^{(\Delta)}$$

S'1 (D+L,L,0)

Fig. 11

$$\frac{X_j - Y_j\,tg(\alpha)}{X_2 - Y_2\,tg(\alpha)} = \frac{\dfrac{Y_j}{\cos(\alpha)} + D}{\dfrac{Y_2}{\cos(\alpha)} + D}$$

$$\frac{Z}{Z_2} = \frac{\dfrac{Y_j}{\cos(\alpha)} + D}{\dfrac{Y_2}{\cos(\alpha)} + D}$$

$$Y_2 = \frac{L}{\cos(\alpha)} - X_2\,tg(\alpha)$$

Fig. 12

Fig. 13

Fig. 14

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2888374

- WO 2007006560 A